Europäisches Patentamt

European Patent Office

Office européen des brevets

(19)

(11) **EP 0 743 888 B1**

(12) **EUROPÄISCHE PATENTSCHRIFT**

(45) Veröffentlichungstag und Bekanntmachung des Hinweises auf die Patenterteilung:
**20.05.1998 Patentblatt 1998/21**

(21) Anmeldenummer: **95908879.0**

(22) Anmeldetag: **08.02.1995**

(51) Int. Cl.$^6$: **B23K 26/08**, B23K 26/06, G02B 7/182

(86) Internationale Anmeldenummer:
**PCT/DE95/00167**

(87) Internationale Veröffentlichungsnummer:
**WO 95/21720 (17.08.1995 Gazette 1995/35)**

(54) **VORRICHTUNG UND VERFAHREN ZUR LASERSTRAHLFORMUNG, INSBESONDERE BEI DER LASERSTRAHL-OBERFLÄCHENBEARBEITUNG**

DEVICE AND PROCESS FOR SHAPING A LASER BEAM, ESPACIALLY IN LASER-BEAM SURFACE MACHINING

DISPOSITIF ET PROCEDE DE MISE EN FORME DE FAISCEAUX LASER, EN PARTICULIER POUR L'USINAGE DES SURFACES PAR LASER

(84) Benannte Vertragsstaaten:
**AT CH DE FR GB IT LI**

(30) Priorität: **09.02.1994 DE 4404141**

(43) Veröffentlichungstag der Anmeldung:
**27.11.1996 Patentblatt 1996/48**

(73) Patentinhaber:
• **FRAUNHOFER-GESELLSCHAFT ZUR FÖRDERUNG DER ANGEWANDTEN FORSCHUNG E.V.**
**80636 München (DE)**

• **KARL H. ARNOLD MASCHINENFABRIK GMBH & CO. KG**
**D-88214 Ravensburg (DE)**

(72) Erfinder:
• **POLLACK, Dieter**
**D-01277 Dresden (DE)**
• **MORGENTHAL, Lothar**
**D-01187 Dresden (DE)**
• **GNANN, Rüdiger, Arnold**
**D-88214 Ravensburg (DE)**

(56) Entgegenhaltungen:
**EP-A- 0 262 225**     **EP-A- 0 570 152**
**US-A- 2 137 286**

**Beschreibung**

Die Erfindung betrifft eine Vorrichtung und ein Verfahren, bei dem diese Vorrichtung eingesetzt werden kann, zur Laserstrahlformung, insbesondere bei der Laserstrahl-Oberflächenbearbeitung von Werkstücken. Unter Laserstrahl-Oberflächenbearbeitung ist dabei nicht allein die Laserstrahloberflächenhärtung, insbesondere Umwandlungshärtung, zu verstehen, sondern auch andere Laserstrahloberflächenbearbeitungsverfahren, wie zum Beispiel Legieren, Umschmelzen, Beschichten, Abtragen, Schweißen, Schneiden und andere. Die Erfindung ist anwendbar bei der Behandlung metallischer, nichtmetallischer und/oder keramischer Werkstückoberflächen im festen und flüssigen Zustand.

Es ist bekannt, daß bei der Laserbearbeitung sowohl der Qualität des "Rohstrahles" als auch der Strahlformung, mit der der "Laserrohstrahl" für die gewünschte Anwendung "geformt" wird, eine besondere Bedeutung beizumessen ist, da dadurch sowohl das Verfahren, Qualität, Quantität und Effizienz bei der Oberflächenbearbeitung entscheidend mitbestimmt werden. Daraus leiten sich die Forderungen einerseits nach optimaler "Laserrohstrahlqualität" und andererseits nach anpaßbaren, d.h. der "Rohstrahlqualität" und der Bearbeitungszielstellung entsprechenden, Fokussierungs- bzw. Strahlformungselementen (Transmissions- und Reflexionsoptiken, insbesondere Metalloptiken) ab. Mit der Verfügbarkeit von Lasern mit höherer Ausgangsleistung (> 5 kW) ist eine Verschlechterung der "Rohstrahlqualität" im allgemeinen Sinne verbunden. Das bedeutet unter anderem, daß die Leistungsdichteverteilung über den Rohstrahlquerschnitt ungleichmäßiger, d.h. inhomogener, wird, daß sich die Strahldurchmesser insgesamt vergrößern, was bedeutet, daß die optischen Komponenten und die Gefäßdurchmesser für die Strahlübertragungsstrecken vergrößert werden müssen und vieles andere mehr. Die Verfügbarkeit von Strahlformungselementen für größere Strahldurchmesser ist aufgrund des Preises, der Optikfertigung und Leistungsverträglichkeit sehr eingeschränkt und erfordert gleichzeitig zusätzliche Maßnahmen beim technischen Einsatz, wie z.B. Kühlung usw.

Ausgehend von diesen Nachteilen wurde versucht, den Laserstrahl mittels statischen oder dynamischen Strahlformungselementen, oder einer Kombination beider zu formen und abzulenken.

Alle Varianten der statischen Strahlformer haben den Vorteil für größere Laserleistungen geeignet zu sein, aber ihnen lasten gemeinsam die Nachteile der mangelnden Flexiblität, d.h. nur für einen Arbeitspunkt (Spotabmessung) anwendbar und ungenügender Leistungsspitzenausgleich, an. Der Spot, eines statischen Strahlformers, mit seinen bereits diskutierten Mängeln, wird berechnet und hergestellt für genau definierte Rohstrahlparameter, wie z.B. Durchmesser, Divergenz, Modenbildkonfiguration, Winkel von Strahlachse zur Strahlformerachse, Umlenkwinkel u.ä.. Beim praktischen Arbeiten wird festgestellt, daß alle diese Parameter kurz- und langzeitlichen Veränderungen unterliegen. So z.B. entstehen beim Arbeiten mit mehreren Arbeitsstationen, allein schon durch unterschiedlich lange Strahlwege Abweichungen von den definierten Strahlparametern (Ausleuchtung der Spiegelfläche des statischen Strahlformers) oder durch Standzeit (Lebensdauer) bedingte Veränderungen des Laserbetriebszustandes (Alterung der Auskoppelscheibe; Verschmutzung der internen Laserspiegel). Diese Veränderungen verursachen qualitative Unterschiede bei der Laser-Materialbearbeitung im Werkstück, die letztlich das Arbeitsergebnis so nachteilig beeinflussen, daß versucht wird diesen Veränderungen durch aufwendige zusätzliche Maßnahmen wie z.B. Einbau von Teleskopen, adaptiven optischen Elementen, gekoppelt mit Sensorik und Regelung usw. entgegenzuwirken. Bei den dynamischen Strahlformern, z.B. Scannerspiegeln, erfolgt ein gewisser Leistungsspitzenausgleich. Diese haben jedoch den Mangel, daß sie allgemein nur in einen Laserleistungsbereich bis maximal 5 kW angewendet werden können, wobei die geometrische Verteilung der Strahlungsintensität im Spot (Leistungsspitzen, Strahlinhomogenitäten usw.) auf der Werkstückoberfläche vergleichmäßigt (homogenisiert) wird. Die prinzipbedingten Leistungsüberhöhungen (Inhomogenitäten) in den Umkehrstellen des Scannerspiegels, z.B. beim eindimensionalen Scanning am rechten und linken Spurrand, werden bei der Oberflächenbearbeitung in das Werkstück ebenfalls transformiert und beeinträchtigen (begrenzen) den Laserbearbeitungsprozeß, insbesondere beim Umwandlungshärten, sehr nachteilig.

Zur Beseitigung dieser Nachteile wurde mit der in DE 41 20 905 dargestellten Lösung eine Kombination eines statischen und eines dynamischen Strahlformers versucht.

Der Nachteil dieser Lösung besteht darin, daß sie zum ersten nur für das Laserstrahlschneiden anwendbar ist, hier ausschließlich im Fokus gearbeitet werden muß und Arbeiten in hohen Drehzahlbereichen des zweiten rotierenden Spiegels ausgeschlossen sind. Ein weiterer Nachteil dieser Lösung ist, daß sie spiegelseitig nicht variabel ist. Es kann hier nur jeweils ein rotierender Spiegel für genau eine Anwendung eingesetzt werden. Eine andere Anwendung erfordert einen anderen Spiegel. Ein Grund für die hier genannten Nachteile ist darin zu sehen, daß hier die Bedingung der Einhaltung eines orthogonalen Achssystems erfüllt sein muß.

Eine Verbesserung dahingehend ist mit DE 39 39 577 gegeben, indem diese Bedingung des orthogonalen Achssystems hier nicht besteht. In der in DE 39 39 577 dargestellten Lösung wird ebenfalls die Kombination des statischen Strahlformers mit dem dynamischen Strahlformer versucht. Erfindungsgemäß ist in der Lösung von DE 39 39 577 der dynamische Strahlformer ein Spiegel, der als strahlablenkende Spiegelfläche eine Schrauben-Wendelfläche hat und seine Rotationsachse die Schraubendrehachse der Wendelfläche ist.

Diese in DE 39 39 577 dargestellte Lösung hat den Nachteil, daß aufgrund der nicht durchgängigen, strahlablenkenden Spiegelfläche (Kanten, mindestens 1 Stufe) des dort erfindungsgemäßen Spiegels mindestens eine Unstetigkeit in der Strahlablenkung auftritt und daß an den Kanten undefinierte Streueffekte zu verzeichnen sind. Zum anderen ist bei dieser Lösung die aufwendige Spiegelherstellung nachteilig, was noch dadurch verstärkt wird, daß im Falle der Variation der Ablenkung des Strahls stets der Spiegel entsprechend der gewünschten Strahlablenkung ausgetauscht werden muß.

Weiterhin hat die Lösung nach DE 39 39 577 den Nachteil, daß mit dieser Vorrichtung keine definierte Ablenkung erzeugt werden kann. Das liegt darin begründet, daß auf einer Schraubenlinie, wie sie dem Spiegel der Vorrichtung aus DE 39 39 577 zugrunde liegt, in Bezug auf den Radius in der bestrahlten Fläche unterschiedliche konkave Krümmungen zumindest teilweise auf der bestrahlten Fläche unterschiedlich abgelenkt werden.

Dadurch entsteht zwangsläufig eine Abbildungsverzerrung, weil nicht über die ganze Strahlbreite fokussiert werden kann.

Schließlich ist bei dieser Lösung noch von Nachteil, daß die strahlablenkende Spiegelfläche des in DE 39 39 577 dargestellten erfindungsgemäßen Spiegels bedingt durch die Durchführung für die Rotationsachse usw. nicht durchgängig ist. Das hat zur Folge, daß der Laserstrahl nicht über die ganze theoretisch mögliche, strahlablenkende Spiegelfläche geführt werden kann, was wiederum bewirkt, daß die quasi zur "Nutzung" zur Verfügung stehende Spiegelfläche einer vergleichsweise höheren Belastung unterliegt.

Darüberhinaus ist in US 4,797,532 eine Vorrichtung zur Laserstrahlformung bei der Laserstrahloberflächenhärtung beschrieben. Die in US 4,797,532 dargestellte Lösung zum Laserhärten hat unter anderem einen grundsätzlichen Mangel in der Spiegelanordnung. Die Lösung, den drehbaren Spiegel vor dem Fokussierspiegel anzuordnen, bedeutet, daß der zu fokussierende Laserstrahl mit ständigen Winkelabweichungen auf den Fokussierspiegel trifft, wodurch beachtliche Abbildungsfehler und Astigmatismus entstehen. Astigmatismus tritt nach [H. Hügel, Strahlwerkzeug Laser, Verlag B.G. Teubner Stuttgart 1992 (ISBN 3-519-06134-1) Seite 200] immer dann auf, wenn der zu fokussierende Strahl einen Winkel mit der Achse der Optik bildet, was aber in der US 4,797,532 grundsätzlich der Fall ist. Durch diese nachteiligen Veränderungen der Strahleigenschaften kann keine brauchbare Fokussierung mehr gewährleistet werden und die angestrebten Ziele können prinzipbedingt nicht oder nur unvollständig erreicht werden.

Weiterhin ist in der US 4,797,532 nachteilig, daß die Vorrichtungen zur Laserstrahlformung in ihren Abmessungen sehr groß und massebehaftet werden. Allein die Antriebsgestaltung, die Drehbewegung von einem separaten Motor über Riementriebe zu einem kompakten Lagergehäuse zu übertragen, ist platz- und masseaufwendig. Das Lagergehäuse mit drehbarem Spiegel, eine weitere selbständige Baugruppe, hat manuell zu bedienende Hatetungen und Justierschrauben, wodurch Unwuchten entstehen, die den praktisch nutzbaren Drehzahlbereich stark einschränken.

Durch die Anordnung des drehbaren Spiegels vor dem Fokussierspiegel muß der Durchmesser des Fokussierspiegels viel größer werden, als aus dem eigentlich zum Einsatz kommenden Laserstrahldurchmesser resultiert. Möglichkeiten den drehenden Spiegel vor Verschmutzungen zu schützen und zu kühlen werden nicht diskutiert.

Es ist somit Aufgabe der Erfindung eine Vorrichtung zur Laserstrahlformung, insbesondere bei der Laserstrahl-Qberflächenbearbeitung vorzuschlagen, die flexibel einsetzbar und einem großen Anwendungsbereich zugänglich ist.

Weiterhin ist es Aufgabe der Erfindung eine Vorrichtung der genannten Art zu entwickeln, bei der strahlformende Elemente eingesetzt werden, die leicht verfügbar, ohne großen Aufwand herstellbar und damit auch kostengünstig sind.

Zusätzliche Aufgabe der Erfindung ist es, eine Vorrichtung der genannten Art vorzuschlagen, bei der strahlformende Elemente zum Einsatz kommen können, die keine Unstetigkeiten in der Strahlablenkung und keine undefinierten Streueffekte zur Folge haben.

Darüber hinaus ist es noch Aufgabe der Erfindung, eine Vorrichtung der genannten Art aufzuzeigen, bei der die Flächen der eingesetzten strahlformenden Elemente, auf die der Laserstrahl trifft, durch diesen keiner höheren als der unvermeidlichen Belastung ausgesetzt sind und die die gesamten Nachteile des aufgezeigten Standes der Technik nicht aufweist.

Eine weitergehende Aufgabe der Erfindung besteht darüberhinaus noch darin, mindestens ein mögliches Verfahren vorzuschlagen, bei dem die erfindungsgemäße Vorrichtung vorteilhaft eingesetzt wird und bei dem demzufolge die im Stand der Technik genannten Nachteile nicht auftreten.

Eine zusätzliche Aufgabe der Erfindung ist desweiteren mögliche Anwendungen der vorzuschlagenden Vorrichtung und des vorzuschlagenden Verfahrens anzugeben.

Erfindungsgemäß werden diese Aufgaben vorrichtungsseitig wie in den Ansprüchen 1 bis 11, verfahrensseitig wie in den Ansprüchen 12 bis 17 und anwendungsseitig wie in den Ansprüchen 18 bis 21 beschrieben, gelöst.

Die Vorrichtung gemäß Anspruch 1 zur Laserstrahlformung, insbesondere bei der Laserstrahl-Oberflächenbearbeitung enthält mindestens einen statischen strahlformenden Spiegel und mindestens einen drehbar gelagerten und rotierend antreibbaren Drehspiegel, wobei in Laserstrahlrichtung gesehen der statische strahlformende Spiegel vor dem Drehspiegel angeordnet ist. Eine Vorrichtungsvariante sieht dabei vor, daß jeweils nur ein statischer strahlformender Spiegel und ein Drehspiegel eingesetzt wird. Erfindungsgemäß ist bei der vorgeschlagenen Vorrichtung die Senkrechte auf der strahlablenkenden Fläche des Drehspiegels, die auch als Normale der strahlablenkenden Drehspiegelfläche bezeichnet werden kann, um einen bestimmten Winkel zur Drehachse verkippt. Dabei ist für den jeweiligen Anwendungsfall zu berücksichtigen, daß über den Einfallswinkel des Laserstrahles auf die Probe reguliert werden kann, ob die Abbildung des Laserstrahles auf der Probe, die man auch Einwirkfläche des Laserstrahles auf der Probe nennen kann, ein Kreis, eine Ellipse oder im Grenzfall eine Linie ist. Dabei ist diese Einwirkfläche bei einem Einfallswinkel des Laserstrahles = 0 ein Kreis und bei einem Einfallswinkel des Laserstrahles > 0 eine Ellipse. Das Achsenverhältnis dieser Ellipse ist bekanntermaßen abhängig von der Größe dieses Einfallswinkels und diese Ellipse wird mit steigendem Einfallswinkel des Laserstrahles immer linienförmiger.

Die Größe der Einwirkfläche des Laserstrahles auf der Probe wird dann bei gleichbleibender Abbildungslänge von der Größe des Winkels bestimmt, um den die Normale der strahlablenkenden Drehspiegelfläche zur Drehachse verkippt ist. Ein großer Verkippungswinkel bewirkt eine große Einwirkfläche.

Mit der erfindungsgemäßen Lösung kann in einer weiteren Variante die Einwirkfläche des Laserstrahles auf der Probe verändert werden, wenn z.B. der vorfokussierte Laserstrahl mit seiner optischen Achse nicht in das Achszentrum (Drehpunkt) und/oder nicht im Winkel von 45° auf die Oberfläche des Drehspiegels trifft. Diese Möglichkeiten können zusätzlich genutzt werden, um weitere Variationen der Einwirkfläche (Form und Größe) des Laserstrahles auf dem Werkstück einstellen zu können.

Der statische, strahlformende Spiegel kann z.B. ein fokussierender Spiegel mit einer Brennweite von 400 mm sein, vorteilhaft zum Umschmelzen, während es beim Schweißen günstiger ist, mit kürzeren Brennweiten z.B. von 150 mm zu arbeiten. Die statische Strahlformung kann aber auch mit Linienfokussierspiegeln (Facettenspiegeln) erfolgen, mit denen z.B. ein Linienfokus erzeugt werden kann, womit vorteilhaft umgeschmolzen werden kann. Es können aber auch langgestreckte Strahlfleckgeometrien mit Achsenverhältnissen z.B. von 10 : 1 erzeugt werden, womit vorteilhaft das Härten und insbesondere das Härten mit breiten Spuren (beispielsweise 50 mm Breite mit 5 kW Laserleistung) erfolgen kann. Für die Oberflächenbearbeitung hat es sich desweiteren als vorteilhaft erwiesen, daß durch Abstandsänderungen des Drehspiegels zur Probenoberfläche die Abmessungen der Einwirkfläche zusätzlich einstellbar werden. Somit sind mit einem strahlformenden Spiegel eine Vielzahl von Spotgrößen ohne den sonst üblichen notwendigen Spiegelwechsel möglich. Strahlformende Spiegel können beliebige Spiegel bzw. auch Kombinationen sein, was insbesondere von der zu bearbeitenden Aufgabenstellung bestimmt wird.

Desweiteren ist bei der erfindungsgemäßen Vorrichtung die strahlablenkende Fläche des Drehspiegels unstrukturiert gestaltet. Das bedeutet, daß diese Fläche glatt ist und keine Kanten, Stufen oder ähnliches aufweist.

Für den Fall, daß der Drehspiegel keine strahlformenden Funktionen zu erfüllen hat, ist es vorteilhaft, wenn die strahlablenkende Fläche des Drehspiegels eben, das bedeutet, nicht gewölbt oder ähnliches, ist. Für diesen Fall ist es vorteilhaft, herkömmliche Planspiegel einzusetzen. Wenn jedoch der Drehspiegel zusätzliche strahlformende Funktionen zu erfüllen hat, sollte dieser entsprechend der strahlformenden Funktion geformt, zum Beispiel gewölbt, sein.

Die erfindungsgemäße Vorrichtung sieht auch die Variante mit vor, daß der Drehspiegel neben seiner eigentlichen, noch die zuätzliche Funktion der vollständigen Strahlformung zu erfüllen hat. In diesem Fall kann auf den statischen, strahlformenden Spiegel gänzlich verzichtet werden, was für bestimmte Anwendungsfälle, z.B. eine Rohrinnenwandhärtung, vorteilhaft sein kann.

Die erfindungsgemäße Vorrichtung ist vorteilhafterweise bei kleinen und großen Laserleistungen einsetzbar. Es hat sich aber als günstig erwiesen, bei Laserleistungen > 1 kW Metallspiegel, die beschichtet oder unbeschichtet sein können, als statische strahlformende Spiegel bzw. als Drehspiegel einzusetzen. Als besonders günstig hat sich dabei die Verwendung herkömmlicher beschichteter oder unbeschichteter Kupfer-Spiegel erwiesen. Im konkreten Anwendungsfall kann auch der Einsatz beschichteter oder unbeschichteter Aluminiumspiegel vorteilhaft sein.

Es ist prinzipiell denkbar, bei der erfindungsgemäßen Vorrichtung als Drehspiegel, entsprechend ihrer vorhandenen bzw. nicht vorhandenen strahlformenden Funktion geformte Spiegel einzusetzen, die für den jeweiligen entsprechenden Anwendungsfall so gestaltet werden, daß der erforderliche Verkippungswinkel der Normalen der strahlablenkenden Drehspiegelfläche zur Drehachse durch die Drehspiegelgestalt eingestellt wird. Das birgt jedoch den Nachteil in sich, daß für unterschiedliche Verkippungswinkel unterschiedliche Spiegel eingesetzt werden müssen. Es werden deshalb bei der erfindungsgemäßen Vorrichtung vorteilhafterweise als Drehspiegel herkömmliche, entsprechend ihrer vorhandenen bzw. nicht vorhandenen strahlformenden Funktion geformte Spiegel verwendet und zur Erlangung der für den jeweiligen Anwendungsfall erforderlichen Verkippung der Normalen der strahlablenkenden Drehspiegelfläche auf der zum Laserstrahl abgewandten Drehspiegelseite, d.h. der Drehspiegelunterseite, eine entsprechend dem gewünschten Verkippungswinkel geformte und entsprechend der Drehspiegelgröße dimensionierte Keilscheibe oder Keilring befestigt. Dabei ist es vorteilhaft, diese Keilscheibe bzw. diesen Keilring an der Drehspiegelunterseite so zu befestigen, daß sie jederzeit entfernt oder gegen eine andere, einem anderen Verkippungswinkel entsprechende Keilscheibe oder Keilring ausgetauscht werden kann. Dadurch wird gewährleistet, daß für viele Anwendungsfälle der erfindungsgemäßen Vorrichtung ein und derselbe herkömmliche Drehspiegel verwendet werden kann. Da die erforderlichen Keilscheiben bzw. Keilringe in der Herstellung wesentlich einfacher und unkomplizierter sind und beim anwendungsbedingten Wechsel der Keilscheibe oder des Keilringes keinesfalls die strahlablenkende Spiegelfläche belastet wird und somit beschädigt werden kann, wird hierdurch eine wesentliche Vereinfachung und Kostenersparnis im Vergleich zu Vorrichtungen nach dem Stand der Technik erreicht. Bedingt durch seine Funktion ist es vorteilhaft, daß der Drehspiegel rotationssymmetrisch ist.

Zur Erweiterung des möglichen Anwendungsfeldes der erfindungsgemäßen Vorrichtung ist es günstig, für den/die statisch strahlformenden Spiegel, sowie für den/die Drehspiegel Vorrichtungen für deren Kühlung vorzusehen. Somit bleibt die erfindungsgemäße Vorrichtung auch einer Anwendung in einem Laserleistungsbereich ab 0,8 kW Laserleistung nicht verschlossen.

Als Antrieb für die rotierende Bewegung des Drehspiegels wird für die erfindungsgemäße Lösung neben allen Arten von Elektromotoren der Einsatz hydraulisch, insbesondere aber pneumatisch angetriebener Turbinen mit einer Drehzahl ab 10 U/min. als vorteilhaft angesehen, da dadurch der Bereich der für den jeweiligen Anwendungsfall erforderlichen Umdrehungsgeschwindigkeit des Drehspiegels von ab ca. 10 U/min. bis ca. $10^5$ U/min. erweitert wird, ohne daß der Antrieb für die Drehspiegelrotation ausgetauscht werden muß.

Die vorgeschlagene Kompaktbauweise von Antrieb, Lager, Aufnahme, Keilring oder -scheibe und Drehspiegel sichern minimalen Platzbedarf und geringe Masse. Sie garantiert gleichzeitig das notwendige Handling zur Einstellung des Keilwinkels aber auch die notwendige Robustheit als letzte Baugruppe der Strahlführung und -formung zum behandelnden Maschinenbauteil, an meist NC gesteuerten Arbeitsstationen.

Der Einsatz einer pneumatisch angetriebenen Turbine ist besonders bei hohen erforderlichen Drehzahlen des Drehspiegels vorteilhaft. Die erforderliche einzustellende Drehzahl der Turbine selbst richtet sich nach der konkreten Bearbeitunugsaufgabe, z.B. beim Laserstrahloberflächenhärten ist eine Turbinendrehzahl von 4.000 bis 5.000 U/min vorteilhaft, dagegen sind beim Schweißen bei einem Vorschub von 10 m/min Drehzahlen von 50.000 U/min notwendig. Vorteilhafterweise kann die eingestellte Drehzahl der Turbine aber auch, wenn der Antrieb durch einen Elektromotor erfolgt, durch eine geeignete Regelung konstant gehalten oder vorgewählte Drehzahlen z.B. durch die NC-Steuerung der Arbeitsstation abgerufen werden. Es ist aber zu berücksichtigen, daß die Drehzahl der Turbine nicht unbedingt mit der Drehzahl des Drehspiegels übereinstimmen muß, z.B. wenn zwischen Drehspiegelhalterung und Turbine ein Getriebe zwischengeschaltet ist. Das gleiche gilt auch, wenn der Antrieb beispielsweise durch einen Elektromotor erfolgt.

Es ist weiterhin vorteilhaft, als Antrieb für die Drehbewegung des Drehspiegels eine mit Druckluft betriebene Turbine einzusetzen, da dadurch ein weicher, elastischer Antrieb mit großem Stellbereich realisiert und die Druckluftführung so gestaltet werden kann, daß gleichzeitig die optischen Komponenten (Spiegel usw.) vor Partikelbeschlag geschützt und gleichzeitig gekühlt werden können. Einen Schutz vor Verschmutzung und Partikelbeschlag erhält der Drehspiegel bereits durch seine Rotation, dessen Wirksamkeit mit größeren Drehzahlen zunimmt. Durch diese Art von Selbstreinigung erhält der Drehspiegel und damit der Gesamtprozeß zusätzlich eine größere Lebensdauer und Stabilität, zumal der Drehspiegel das gefährdetste optische Bauteil ist, da es dem Bestrahlungsort am nächsten zugeordnet ist. Aus den Untersuchungen ist festzustellen, daß die Lebensdauer von Laserspiegeln allein durch Rotation (Reduzierung von Partikelbeschlag und Verschmutzung) erheblich verlängert werden kann. Die konstruktive, für den jeweiligen Anwendungsfall angepaßte Ausführung der Gesamtvorrichtung wird dabei bestimmt durch die Abstände vom statischen, strahlformenden Spiegel zum Drehspiegel bzw. umgekehrt, vom Keilscheibenwinkel, der Brennweite des strahlformenden Spiegels und der Defokussierung, die von dem gewünschten Spotprofil bestimmt wird.

Das Verfahren nach Anspruch 14 zur Laserstrahlformung, insbesondere bei der Laserstrahl-Oberflächenbearbeitung, bei dem die erfindungsgemäße Vorrichtung gemäß einem oder mehreren der Ansprüche 1 bis 13 eingesetzt wird, sieht vor, daß der Laserstrahl von der Laserstrahlquelle über ein Spiegelsystem, bestehend aus mindestens einem statischen, strahlformenden Spiegel und mindestens einem drehbar gelagerten und rotierend antreibbaren Drehspiegel, zu der zu bearbeitenden Probenoberfläche geführt wird. Erfindungsgemäß wird dabei die Senkrechte auf der unstrukturierten, strahlablenkenden Fläche des Drehspiegels während der Laserbearbeitung um einen bestimmten, vom Anwendungsfall abhängigen Winkel gekippt und dabei der Drehspiegel mit einer Drehzahl von > 10 U/min., z.B. mittels einer Turbine, gedreht. Die Laserbearbeitung kann dabei längs oder quer zur großen Achse des Spots (Spotachse) erfolgen.

Vorteilhafterweise sollten die zum Einsatz kommenden Spiegel bei einer Laserleistung > 0,8 kW gekühlt werden.

Es ist von Vorteil, wenn die Drehzahl des Drehspiegels während der Laserbearbeitung verändert und aus Optimierungsgründen der jeweiligen Bearbeitungsaufgabe, z.B. Materialabtrag, angepaßt wird. So könnte z.B. beim Beginn der Bearbeitung die Drehzahl des Drehspiegels geringer und bei durch den Fortgang der Bearbeitung entstehender Erwärmung, größer sein, was beispielsweise bei der Plasmabearbeitung von Interesse ist.

Desweiteren ist es günstig, wenn entsprechend der jeweiligen Bearbeitungsaufgabe der Winkel, um den die strahlablenkende Fläche des Drehspiegels zur Drehachse verkippt ist, verändert wird, was durchaus, z.B. durch Wechsel der Keilscheibe bzw. des Keilringes, kontinuierlich während des Drehspiegelbetriebes erfolgen kann. Dabei kann diese Veränderung des Verkippungswinkels bei konstanter Drehzahl des Drehspiegels, oder wenn dies erforderlich sein sollte, bei gleichzeitiger Veränderung der Drehzahl des Drehspiegels erfolgen.

Die Verkippung der strahlablenkenden Fläche des Drehspiegels wird dabei, wie bereits vorstehend beschrieben, vorteilhafterweise mittels einer für den Anwendungsfall spezifisch geformt und gestalteten Keilscheibe oder Keilring, die vorzugsweise aus Metall, zum Beispiel Aluminium, Kupfer oder Messing hergestellt sind und austauschbar befestigt sein können, erreicht werden.

Durch die Keiligkeit evtl. entstehende Unwuchten können wie folgt beseitigt werden:

- Bei der Keilscheibe durch "Wuchten", d.h. Messungen zum Rundlauf und Anbringen von gezielt gesetzten Bohrungen, bis keine Unwucht mehr festgestellt werden kann.

- Bei dem Keilring durch erstens Absenken der Masse (Scheibe zu Ring) und zweitens die verbleibende Unwucht durch Anbringen von im voraus berechneten und gezielt einzubringenden tiefen eingefrästen Kerben (Aussparungen). Da jeder Keilring eine andere Keiligkeit besitzt, ist beim Austausch oder Voreinstellen der Keiligkeit das Auswuchtproblem gelöst.

Eine bevorzugte Anwendung der erfindungsgemäßen Vorrichtung und des erfindungsgemäßen Verfahrens ist bei der Laserstrahloberflächenhärtung von Bauteilen, vorzugsweise Laserstrahloberflächenhärtung großer Bauteile, bei der Gas- oder Festkörperlaser eingesetzt werden, oder bei der Laserstrahloberflächenhärtung von Rohrinnenwänden, gegeben.

Eine weitere bevorzugte Anwendung der erfindungsgemäßen Lösung besteht in der Möglichkeit ihres Einsatzes zum Laserstrahlschweißen.

Die vorstehend beschriebene, enindungsgemäße Lösung der gestellten Aufgaben zeichnet sich dadurch aus, daß alle im Stand der Technik erwähnten Nachteile bei ihrer Anwendung nicht auftreten.

Mit der erfindungsgemäßen Lösung wird eine Vorrichtung und ein Verfahren der genannten Art vorgeschlagen, die flexibel anwendbar und durch einfachen Aufbau realisierbar und kostengünstig sind. Die Erfindung eignet sich sehr gut für jedes Laserstrahlübertragungssystem und besonders auch für größere Laserleistungen, auch für Laserleistungen > 10 kW.

Durch die erfindungsgemäße Strahlformung entstehen Strahlbewegungen auf der in Vorschubrichtung bewegten zu behandelnden Werkstückoberfläche, die die Form von Zykloiden haben. Durch Kombination und Variation der Einstellparameter können verschiedenartige Zykloidenformen eingestellt, mathematisch vorausberechnet und damit zur Oberflächenbearbeitung genutzt werden. Insbesondere durch die Überlagerung von Vorschubgeschwindigkeit, Strahlfleckdurchmesser, Auslenkung (Keilwinkel) und Drehspiegeldrehzahl können Strahloszillationen mit mathematisch gesehen fast beliebigen Intensitätsverteilungen auf der Probenoberfläche eingestellt werden. Deren Sinnfälligkeit ist aus der Sicht der jeweilig zu lösenden Aufgabenstellung zu bewerten.

Durch die Anwendung der erfindungsgemäß vorgeschlagenen Lösung wird eine Homogenisierung der Laserstrahlung bzw. deren Leistungsdichteverteilung erreicht, was zum Beispiel auch lokale Überhitzungen der zu bearbeitenden Probenoberfläche während der Laserbehandlung verhindert. Desweiteren wird es durch die Anwendung der Erfindung möglich, gleichzeitig für die Bearbeitungsaufgabe optimal angepaßte Spot-Profile zu realisieren und diese vielfältigen Spotprofile mit einfachen technischen Mitteln auch stabil zu halten. Dabei ist es ohne Belang, ob die Laserbearbeitung im CW- oder im Pulsbetrieb erfolgt. Der einfache Aufbau der erfindungsgemäßen Vorrichtung mit der Kombination Turbine und den an deren Stirnseite befestigten Keilscheibe bzw. Keilring mit Drehspiegel, der hier realisiert ist, gestattet durch einfache Änderungen des Arbeitsabstandes vielfältigste und der gewünschten Oberflächenbearbeitung anpaßbare Spotprofile herzustellen, die vorauswählbar und einstellbar sind.

Die Variante der erfindungsgemäßen Lösung, die im konkreten Anwendungsfall zum Einsatz kommt, richtet sich unter anderem nach der gestellten Bearbeitungsaufgabe und des im konkreten Anwendungsfall zu verwendenden Handlingsystems (z.B. Roboter, CNC-gesteuerte Maschinen usw.). Eine Optimierung kann durch eine geeignete Software erfolgen.

Bei Anwendung der erfindungsgemäßen Lösung kommt weiterhin vorteilhaft zum Tragen, daß ein großer Arbeitsabstand (Abstand Optik zu Bauteil) realisiert werden kann, was eine Erhöhung der Lebensdauer der optischen Komponenten mit sich bringt. Desweiteren wird es durch die erfindungsgemäße Strahlablenkung (Ablenkung durch Drehspiegel, Keilscheibe oder Keilring und Turbine) auch möglich, die Laserbearbeitung mit "Plasmaankopplung" (Laserleistungsdichten ab $10^5$ W/cm$^2$), die bisher allgemein nur für sehr kleine Spotflächen nutzbar war, auch für größere Spurbreiten anwendbar zu machen, wobei aber auch größere Arbeitsabstände eingehalten werden können.

Durch die Anwendung der vorgeschlagenen Lösung werden die gestellten Aufgaben gelöst, die Anwendungsbreite wird wesentlich erhöht und es können Vorteile, wie beispielsweise

- Verwischen lokaler Intensitätsspitzen (hot spots) im Laserstrahlfleck (z.B. bei Strahlfokussierung oder -formung mit facettierten Spiegeln),

- Beeinflussung der Schmelzbaddynamik bei Flüssigphasenprozessen (Vermeiden von Lunkern beim Umschmelzen von Guß) oder

EP 0 743 888 B1

- Vergrößern des Keyhols beim Laserschweißen (Spaltüberbrückung) erreicht werden.

Diese Vorteile waren mit dem Stand der Technik nicht erreichbar.

Mit der erfindungsgemäßen Lösung wird eine Vergleichmäßigung und Glättung von Laserleistungsspitzen über die Spotfläche (Bearbeitungsfläche) erreicht, und damit ermöglicht, Anschmelzungen zu verhindern und gezielt im Prozeß gewünschte Leistungsprofile zu erzielen.

Durch die Möglichkeit der schnellen Bewegung des Strahles von besonders Hochleistungslasern durch die erfindungsgemäße Vorrichtung (Drehspiegel mit Keilscheibe oder Keilring und Turbine oder aber auch der Kombination Drehspiegel mit Keilscheibe, Turbine und nach- oder vorgeschaltetem statischen strahlformenden Spiegel) werden lokale Leistungsüberhöhungen im Spot abgebaut und zusätzlich vielfältigste Spotprofile erzeugt, die nach dem Stand der Technik nicht bzw. nur mit sehr großem Aufwand nachgestaltet werden können.

Die erfindungsgemäße Lösung wird in nachfolgenden Ausführungsbeispielen näher erläutert.

Zum besseren Verständnis sind die in den Ausführungsbeispielen genannten Varianten der erfindungsgemäßen Vorrichtung auch auf den Figuren 1 bis 11 skizziert.

Dabei werden in

- Figur 1        die Spotbeeinflussung durch den Umlenkwinkel $\Phi$,

- Figur 2        die Vorrichtungsvariante, bei der zunächst der statische strahlformende Spiegel 1 angeordnet und der Drehspiegel 2 dem nachgeordnet ist,

- Figur 3        die Vorrichtungsvariante, bei der der statische strahlformende Spiegel 1 und der Drehspiegel 2 so angeordnet sind, daß die Umlenkung im Winkel von $\Phi = 60°$ erfolgt,

- Figur 4        die Vorrichtungsvariante, bei der der statische strahlformende Spiegel 1 und der Drehspiegel 2 so angeordnet sind, daß die Umlenkung im Winkel von $\Phi = 90°$ erfolgt,

- Figur 5        die Vorrichtungsvariante, bei der der statische strahlformende Spiegel 1 und der Drehspiegel 2 so angeordnet sind, daß die Umlenkung im Winkel von $\Phi = 120°$ erfolgt,

- Figur 6a       die Vorrichtungsvariante, bei der der Spot auf der Probenoberfläche durch Verschieben des Drehpunktes des Drehspiegels 2 zum auftreffenden Laserstrahl 5 eingestellt wird,

- Figur 6b       erzielbare Ergebnisse der Spoteinstellung nach der Vorrichtungsvariante 6a,

- Figur 7a bis 7c    erzielbare Ergebnisse der Spoteinstellung zum Schweißen, ausgehend von einer Gauß-Intensitätsverteilung mit Vorschub Null,

- Figur 8a bis 8c    eine Spoteinstellung zum Schweißen mit Top-hat-Intentsitätsverteilung und die Bedeutung des Verhältnisses von Drehzahl und Vorschub für die Ausbildung der Schweißnahtqualität,

- Figur 9a       eine bekannte Spoteinstellung eines Linienfokussierspiegels mit den kritischen Intensitätsspitzen für das Härten ohne Drehspiegelbetrieb,

- Figur 9b       die Spoteinstellung von Figur 9a mit geglätteten Intensitätsspitzen zum Härten durch den Drehspiegelbetrieb,

- Figur 9c       das Härteergebnis, eine 46 mm breit gehärtete Spur mit 1,1 mm Einhärtetiefe, mit der von Figur 9b beschriebenen Vorrichtung, d.h. Härten mit der Spoteinstellung von Figur 9a bei Drehspiegelbetrieb,

- Figur 10a      die Vorrichtungsvariante zur Innenwandhärtung von Rohren, wobei auf den statischen Spiegel 1 verzichtet wird und der Drehspiegel 2 die gesamte Strahlformung übernimmt,

- Figur 10b      der Ausschnitt aus der Vorrichtungsvariante 10a mit Darstellung der Änderung der Laserstrahlform vom Ausgangsstrahl vor Auftreffen auf den Drehspiegel 2 zum Spot hin nach Reflektion vom Drehspiegel 2 und

7

• Figur 11        die Vorrichtungsvariante zum Härten von Wellen und Wellenstümpfen dargestellt.

## 1. Ausführungsbeispiel

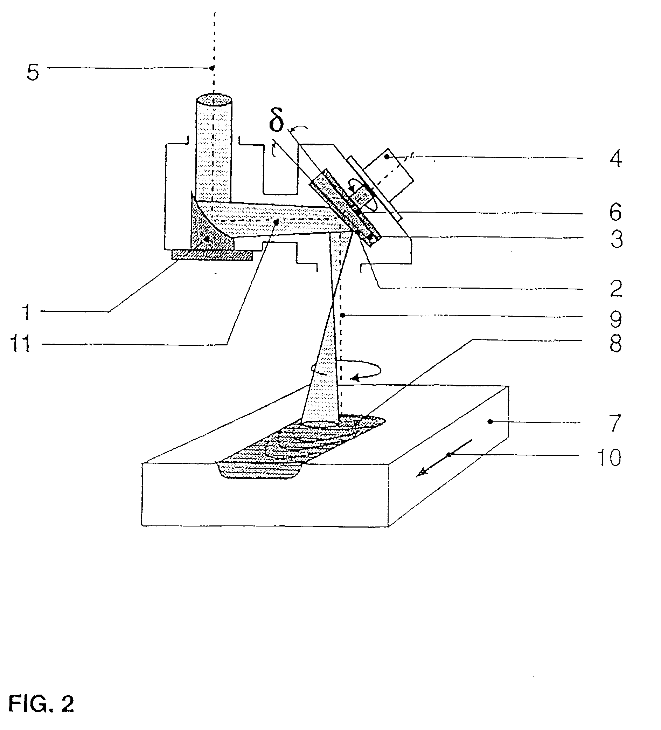

Gemäß Figur 2 wird der Strahl 5 eines Lasers (Laserleistung > 10kW) in die Vorrichtung geführt und trifft dort zunächst auf einen fest installierten und wassergekühlten statischen strahlformenden Kupferspiegel 1, wo er vorfokussiert wird. Von dort wird der Laserstrahl 5 direkt auf einen Drehspiegel 2, der ebenfalls aus Kupfer ist und wassergekühlt sein kann und dessen strahlablenkende Fläche unstrukturiert und plan ist, reflektiert und von da direkt auf die Probe 7 geleitet. Der Drehspiegel 2 ist drehbar gelagert und rotierend antreibbar und fest aber jederzeit austauschbar mittels Schrauben und Muttern mit der an seiner Unterseite befindlichen Keilscheibe 3 verbunden. Somit wird die Normale der strahlablenkenden Fläche des Drehspiegels 2 zur Drehachse definiert um den Winkel $\delta$ verkippt. Je nach der gewünschten Einwirkfläche des Laserstrahls 5 auf der zu behandelnden Probe 7 richtet sich die Größe des Verkippungswinkels. Es gilt der Grundsatz, je größer der Verkippungswinkel $\delta$ ist, umso größer ist auch die Einwirkfläche des Laserstrahles 5 auf der Probe 7.

Die Kombination Drehspiegel 2 / Keilscheibe oder Keilring 3 ist schließlich fest in einer Aufnahme 6 gehaltert, die über einer Achse mit einer Turbine 4 (5.000 U/min) gekoppelt ist, so daß der Drehspiegel mit seiner zur Drehachse verkippten Normalen der strahlablenkenden Fläche kontinuierlich rotierend bewegt werden kann. Im vorliegenden Beispiel wird der Drehspiegel 2 mit 4.000 U/min gedreht. Der Abstand 11 zwischen beiden Spiegeln 1, 2 ist dabei entsprechend der gewünschten Einwirkfläche und dem gewünschten Einwirkprofil, das im Spot 8 ausgedrückt wird, in Kombination mit dem Vorschub 10 und dem damit in Verbindung stehenden Arbeitsabstand 9 einzustellen.

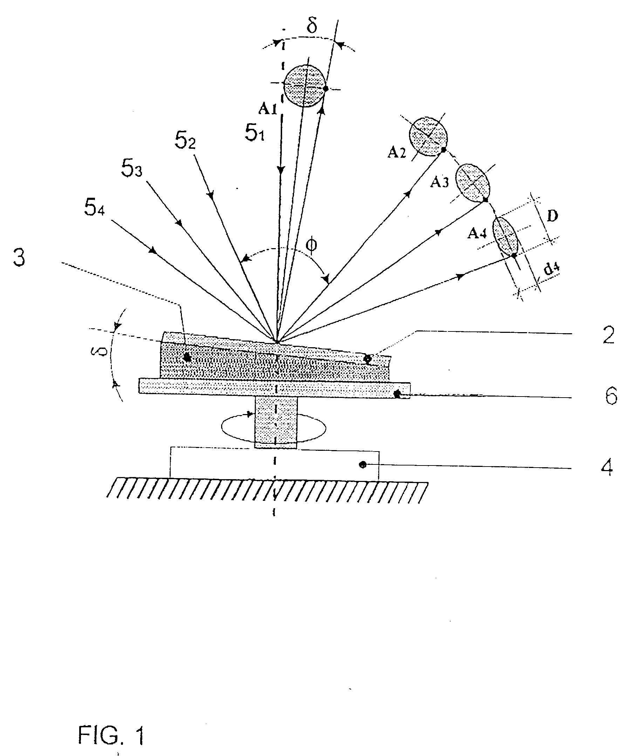

Es ist dabei auch zu beachten, daß die Einwirkfläche des Laserstrahles 5 auch Spot 8 genannt, durch den Umlenkwinkel $\Phi$ im Falle der hier anzuwendenden kleinen Laserstrahldurchmesser stark beeinflußt wird (vgl. Figur 1). Der Winkel $\delta$ stellt dabei den Verkippungswinkel der Normalen der strahlablenkenden Fläche des Drehspiegels zur Drehachse, auch Keilwinkel genannt, dar.

Bei Änderung des Winkels $\Phi$ (vgl. Figur 1) bleibt die große Ellipsenachse (D), deren Länge aus dem Bildabstand multipliziert mit 4 $\delta$ resultiert, unverändert und die jeweilige kleine Ellipsenachse ($d_{1-4}$) ändert sich wie in Figur 1 dargestellt. In der nachfolgenden Tabelle 1 sind die daraus resultierenden Achsenverhältnisse $D/d_{1-4}$ dargestellt.

| Umlenkwinkel $\Phi$ in grd | Achsverhältnis $D:d_{1-4}$ | Prinziplösung |
|---|---|---|
| 0 | 1 : 1 | |
| 60 | 1 : 0,87 | vgl. Figur 3 |
| 90 | 1 : 0,71 | vgl. Figur 4 |
| 120 | 1 : 0,5 | vgl. Figur 5 |
| 135 | 1 : 0,38 | |

Tabelle 1: Achsverhältnis der entstehenden Ellipse, was sich aus cos $\Phi/2$ ergibt.

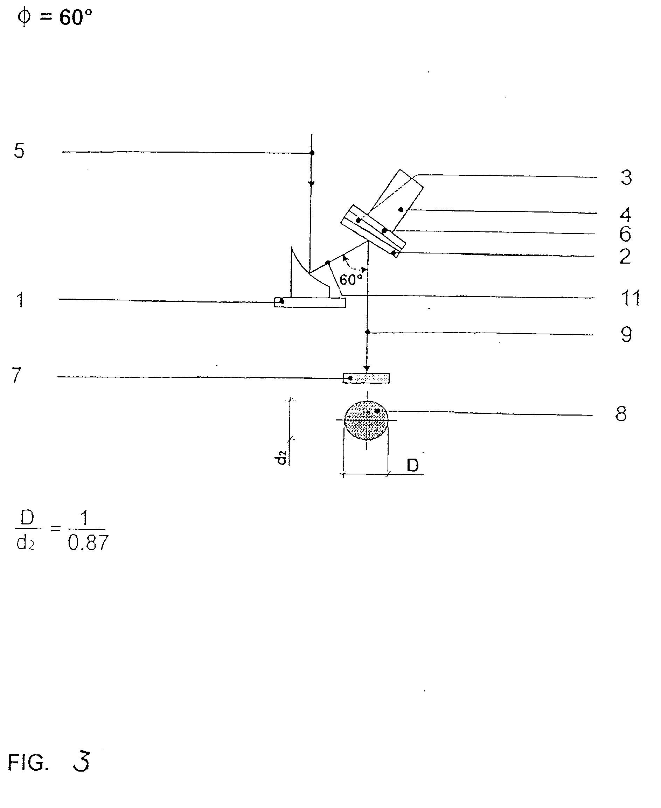

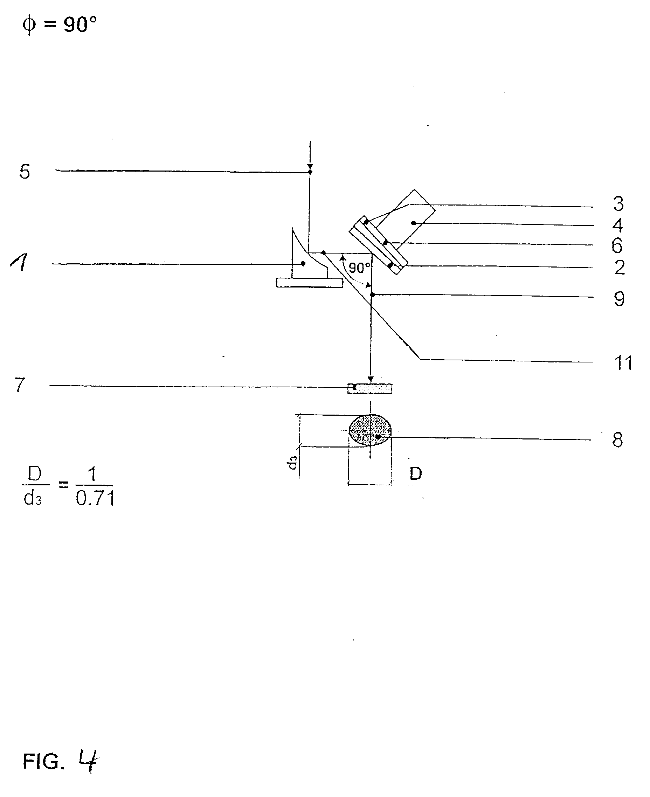

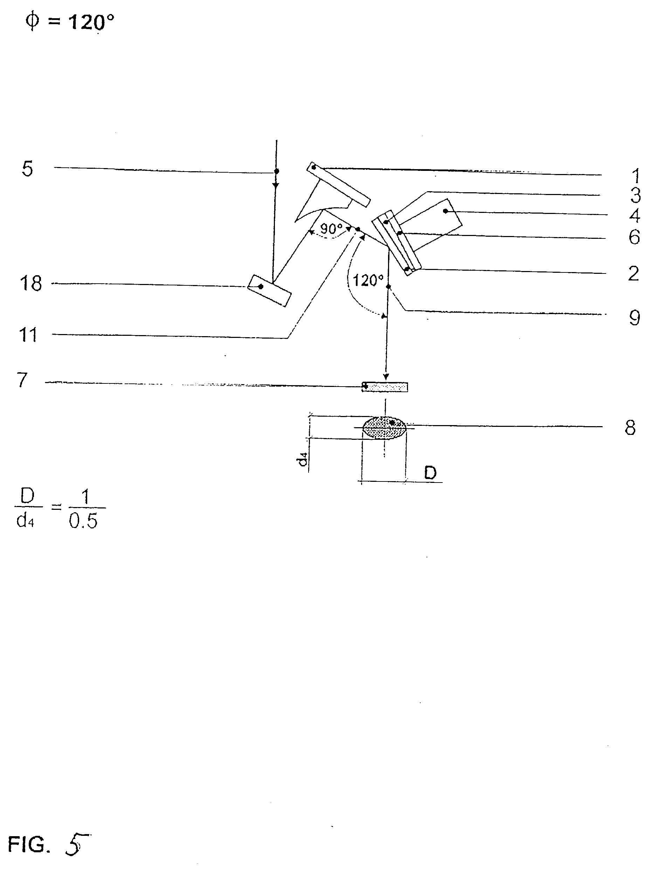

In den Figuren 3 bis 5 ist dargestellt, wie die Strahlführung in Bearbeitungsköpfen gestaltet werden kann, wenn ein bestimmter Umlenkwinkel $\Phi$ und damit ein bestimmtes Achsverhältnis $D/d_i$ im Spot 8 für die Laserbearbeitung genutzt werden soll. Der senkrecht ankommende Laserstrahl 5, wird vom statischen strahlformenden Spiegel 1 über den Drehspiegel 2, einschließlich des gewählten Keilwinkels $\delta$ und der Drehzahl n, unter Ausnutzung des gewünschten Umlenkwinkels $\Phi$ und bei dem einzustellenden Arbeitsabstand 9, wiederum senkrecht auf der Probenoberfläche 8 mit dem vom Umlenkwinkel $\Phi$ abhängigen Achsverhältnis des Spots 7 abgebildet. Die Strecke 11 und 9, Abstand zwischen statischen strahlformenden Spiegel 1 und dem Drehspiegel 2 bzw. Drehspiegel 2 und Probenoberfläche 8, ist in den Figuren 3 bis 5 jeweils gleich lang. Der Arbeitsabstand 9, als die größere Strecke im Vergleich zum Abstand 11, bietet durch seine größere Länge schon einen gewissen Schutz vor Partikelbeschlag und Verschmutzung, insbesondere für den Drehspiegel, der bei der Strahlexposition auf der Probe 8 das gefährdetste optische Element ist. Ein zusätzlicher besonders wirksamer Schutz ergibt sich in der vorgeschlagenen Lösung durch die Drehung des Drehspiegels. Mit der hier vorgeschlagenen Lösung konnten Behandlungen mit Plasmaankopplung an Proben aus dem Werkstoff C15 durchgeführt werden, wobei der eingestellte Abstand 9 nur 100 mm betrug, ohne daß sichtbare Verschmutzungen des Drehspiegels festgestellt werden konnten.

Mit der hier vorgestellten Vorrichtung konnten definierte Härteprofile und Laserstrahleinwirkflächen bei der Laseroberflächenhärtung verschiedenster Proben problemlos eingestellt und variiert werden.

## 2. Ausführungsbeispiel

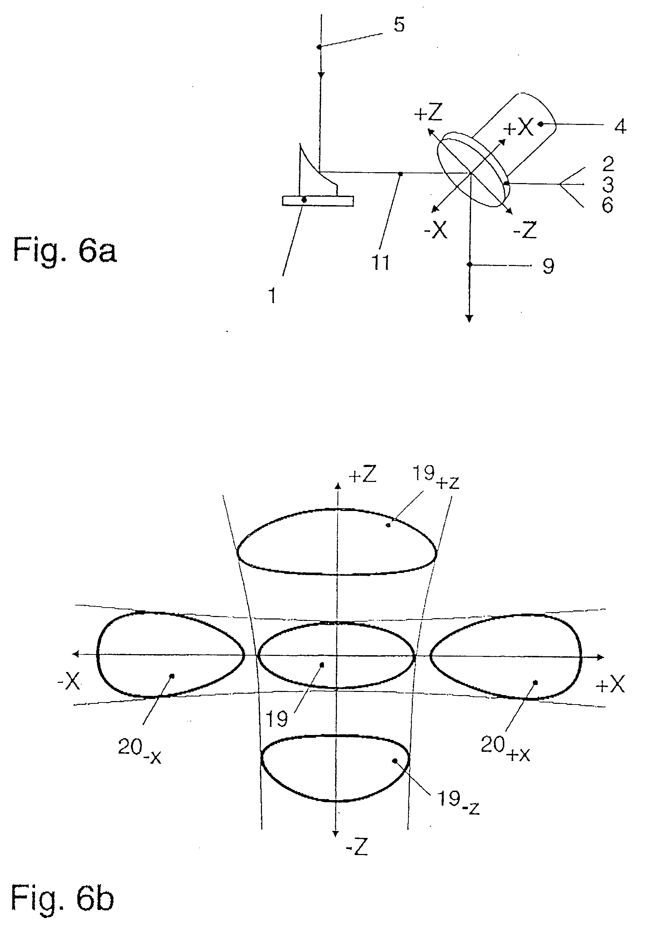

Mit Figur 6a wird eine weitere Möglichkeit zur Einstellung der gewünschten Einwirkfläche (Spot) des Laserstrahles auf der Probenoberfläche beschrieben. Während Figur 6a das Prinzip erläutert, werden mit Figur 6b die resultierenden Auswirkungen der Stellmöglichkeiten auf der Probenoberfläche beschrieben. In Figur 6a trifft der Laserstrahl 5 senkrecht auf den strahlformenden Spiegel 1 und wird mit dem Umlenkwinkel $\Phi = 90°$ auf den Drehspiegel 6, der von der kompakten Drehvorrichtung 2,3 und 4 (vgl. auch Figur 1) getragen wird, reflektiert. Üblicherweise wird davon ausgegangen, daß die Mittenachse des Laserstrahls 5 nach Durchlaufen der Teilstrecke 11 unter dem Winkel von 45° im Achszentrum (Drehpunkt) auf der Oberfläche des Drehspiegels auftrifft und von dort im Arbeitsabstand 9 auf der Probenoberfläche die Strahlexposition erfolgt. Der dabei entstehende Strahlfleck ist gemittelt über eine Zeit, größer der Umdrehungszeit des Drehspiegels, eine Ellipse mit der großen Ellipsenachse von $D = 2*(/$Strecke $9/)*$ tan $2*\delta/60$ und der kleinen Ellipsenachse bei $\Phi = 90°$ von d = 0,71 D. Die zugehörige Strahlfleckform ist in Figur 6b als Ellipse 19 dargestellt. Wird der Drehspiegel mit seiner kompakten Drehvorrichtung in Richtung + Z oder in Richtung -Z um einen Betrag c verschoben, wobei die Verschieberichtung aus Figur 6a ersichtlich ist, verändern sich Abmessung und Geometrie der Ellipse 19 zu einer Spotform der Einwirkfläche $19_{+z}$ bzw. $19_{-z}$ wie in Figur 6b dargestellt ist. Die große Achse der Einwirkfläche $19_{+z}$ ergibt sich dann nach $D_z = (/$Strecke $9/*4\delta) + (2* \sqrt{2} * c \delta)$. Bei Verschiebung nach -Z verändert sich die Abmessung und Geometrie der Ellipse 19 zur Einwirkfläche $19_{-z}$. Die große Achse $19_{-z}$ errechnet sich dann nach $D_z = (/$Strecke $9/ *4\delta) - (2* \sqrt{2} * c \delta)$. D.h., daß die Abmessungen der ellipsenförmigen Einwirkflächen beim Verschieben um den Betrag von c nach -Z kleiner und beim Verschieben um den Betrag von c nach +Z größer werden. Weitere Veränderungen der Einwirkfläche entstehen beim Verschieben des Drehspiegelachszentrums in Richtung +X bzw. -X, wie in Figur 6b mit $19_{+x}$ bzw. $19_{-x}$ dargestellt wird. Bei gleichzeitiger Verschiebung in X- und Z-Richtung können weitere kombinierbare Änderungen von Abmessung und Geometrie eingestellt werden. Abmessungs- und Geometrieänderungen bewirken lokale und zeitliche Änderungen der auf der Probenoberfläche einwirkenden Intensität. Mit der erfindungsgemäßen Lösung können zusätzliche Intensitätsbeeinflussungen der Einwirkfläche eingestellt werden.

## 3. Ausführungsbeispiel

Im Ausführungsbeispiel 3 wird die erfindungsgemäße Strahlformung zum Schweißen mit Laserstrahlen beschrieben. Zielstellung bzw. Vorteile beim Schweißen durch Einsatz der erfindungsgemäß vorgeschlagenen Drehspiegeloptik gegenüber dem herkömmlichen Schweißen mit Laserstrahlen sind:

1. Herstellung breiterer Schweißnähte, z.B. zur Spaltüberbrückung, mit vergleichsweise geringerem Geschwindigkeitsverlust gegenüber der herkömmlichen Nahtverbreiterung durch Defokussieren.

2. Schweißnähte mit geringer Anzahl an Poren und mit kleinerer Porengröße (durch vergrößertes Keyhole bessere Ausgasung).

3. Größerer Stellbereich und erweiterte Schweißparameter (Variationsbreite) gegenüber dem herkömmlichen Schweißen mit Laserstrahlen, wodurch verbesserte (optimierte) Schweißnähte mit größerer Anpassung der Strahlparameter an spezielle Schweißaufgaben möglich sind.

4. Nutzung höherer Laserleistungen zum Schweißen bei hohen Vorschubgeschwindigkeiten (Hochgeschwindigkeitsschweißen) durch Beeinflussung der Keyhole-Abmessung.

5. Schweißen mit besserer Energieausnutzung.

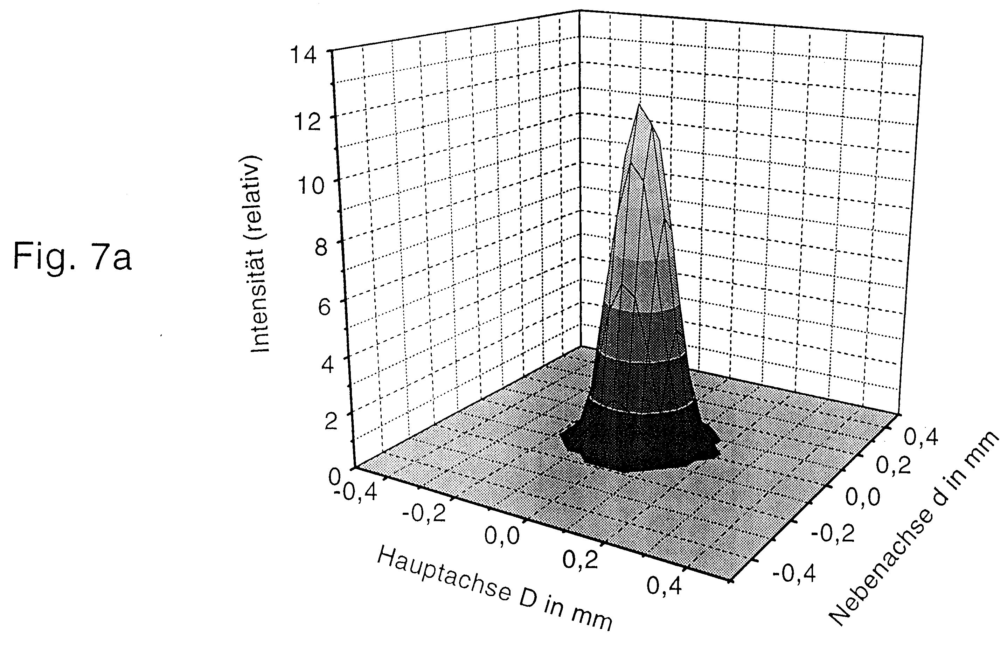

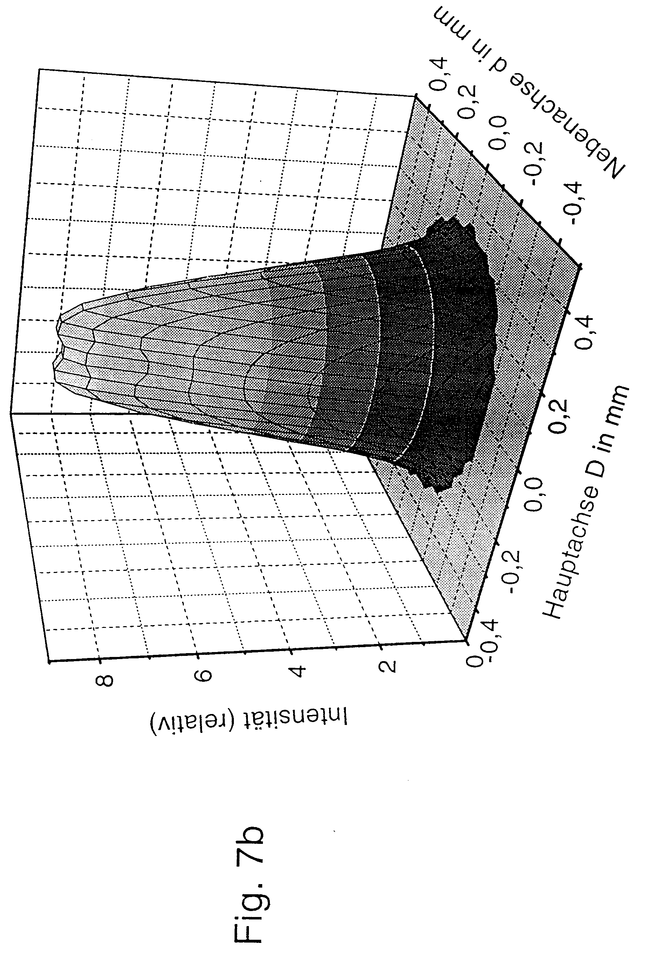

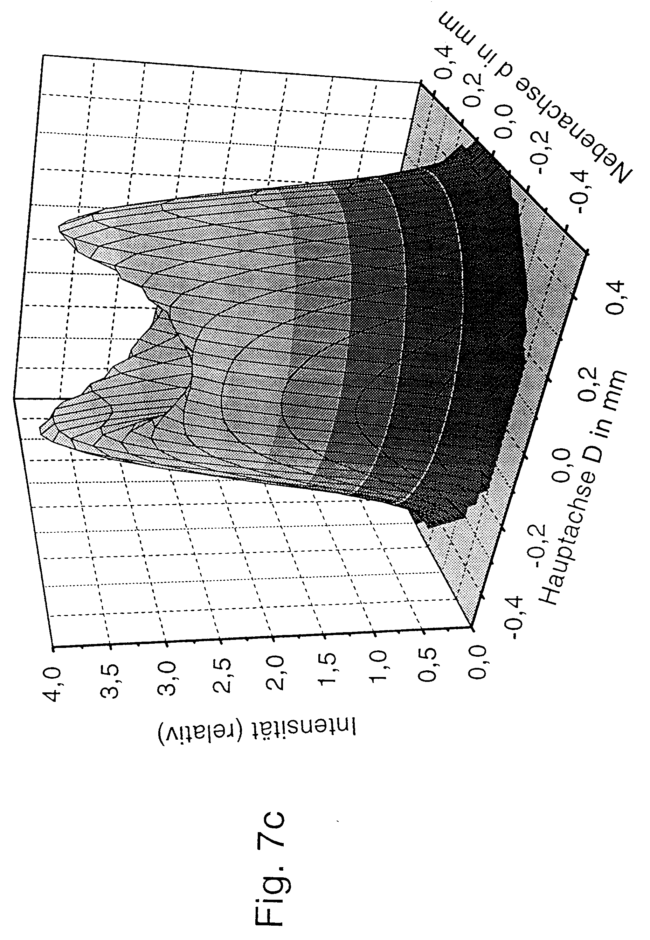

Mittels des erfindungsgemäßen Verfahrens kann mit dem durch die Fokussierung überhaupt erzielbaren minimalen Strahldurchmesser oder einem gezielt größer eingestellten, geschweißt werden. Figur 7a bis 7c demonstrieren auszugsweise die Vielfalt an möglichen Spoteinstellungen zum Schweißen durch Änderung der Achsauslenkung, ausgehend von einem der Praxis angenäherten Gaußprofil. Zur übersichtlicheren Darstellung wurde die Variation des Verhältnisses von Strahlradius R und Achsauslenkung D bzw. d in den Figuren 7a, 7b und 7c ohne Vorschub (V = 0) dargestellt. Die verwendeten Parameter sind in der nachfolgenden Tabelle 2 zusammengestellt.

| Parameter | Gauß-Intensitätsverteilung | | | top-hat-Intensitätsverteilung | | |
|---|---|---|---|---|---|---|
| | Variation des Verhältnisses von Strahlradius R und Achsauslenkung D bzw. d | | | Variation des Verhältnisses von Drehzahl n und Vorschub v | | |
| Figur | 7a | 7b | 7c | 8a | 8b | 8c |
| Radius R in mm | 0,175 | 0,175 | 0,175 | 0,25 | 0,25 | 0,25 |
| Achsauslenkung D in mm | 0,1 | 0,3 | 0,6 | 0,061 | 0,061*) | 0,061*) |
| Achsauslenkung d in mm | 0,07 | 0,21 | 0,42 | 0,04 | 0,04 | 0,04 |
| Drehzahl n in TU/min | 6.000 | 6.000 | 6.000 | 10.000 | 10.000 | 60.000 |
| Vorschub in m/min | 0 | 0 | 0 | 0 | 10 | 10 |

*) D in Vorschubrichtung

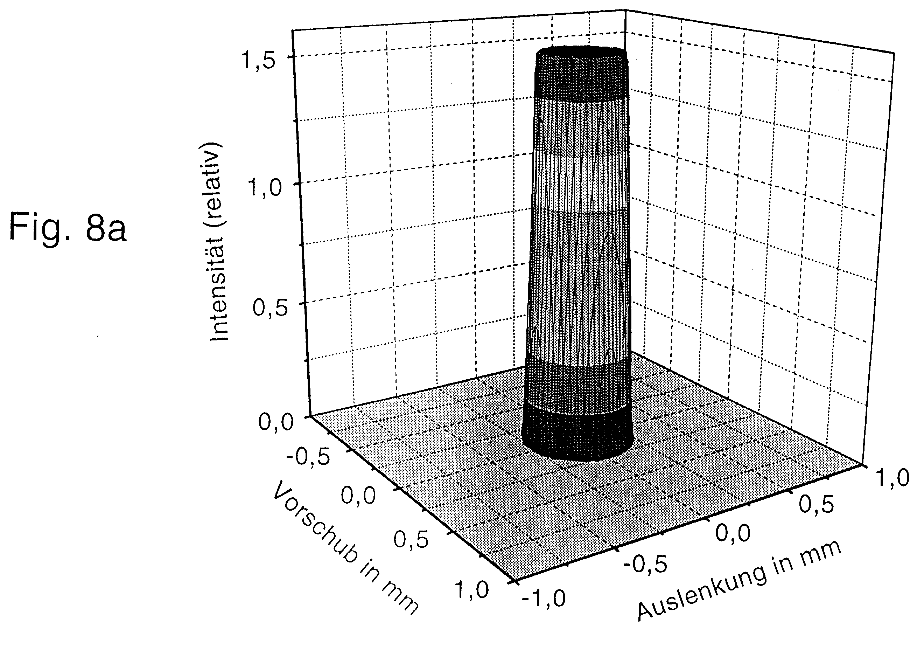

**Tabelle 2:** Zusammenstellung der Parameterkombinationen, die in Figuren 7a bis 7c und 8a bis 8c zur Darstellung der Intensitätsverteilungen verwendet wurden.

Figur 7a bis 7c demonstrieren u.a., wie aus dem Gaußprofil durch Drehung und Vergrößerung der Auslenkung (Keilwinkel) ein Hohlstrahl entsteht.

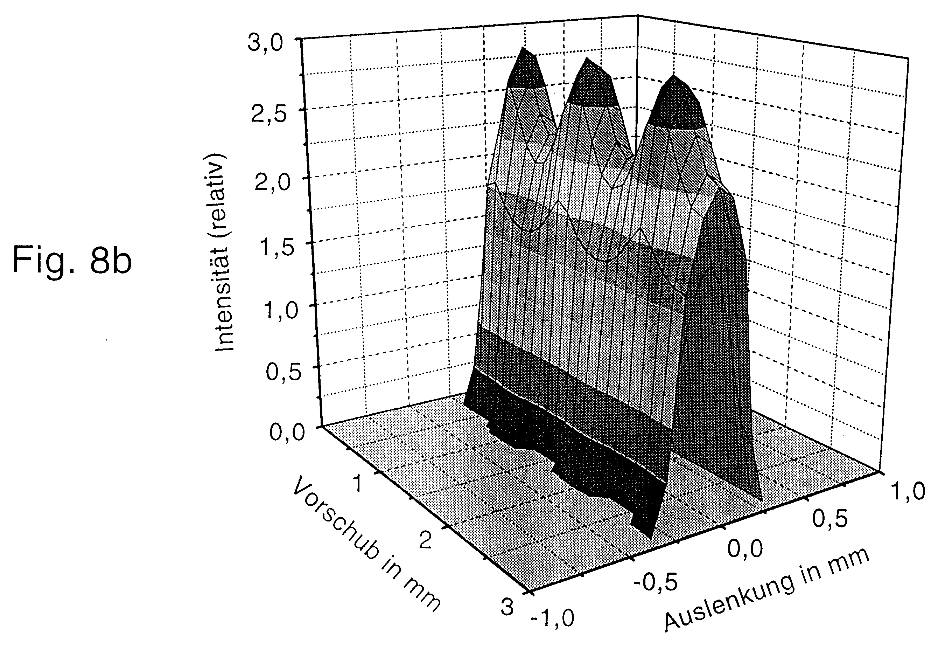

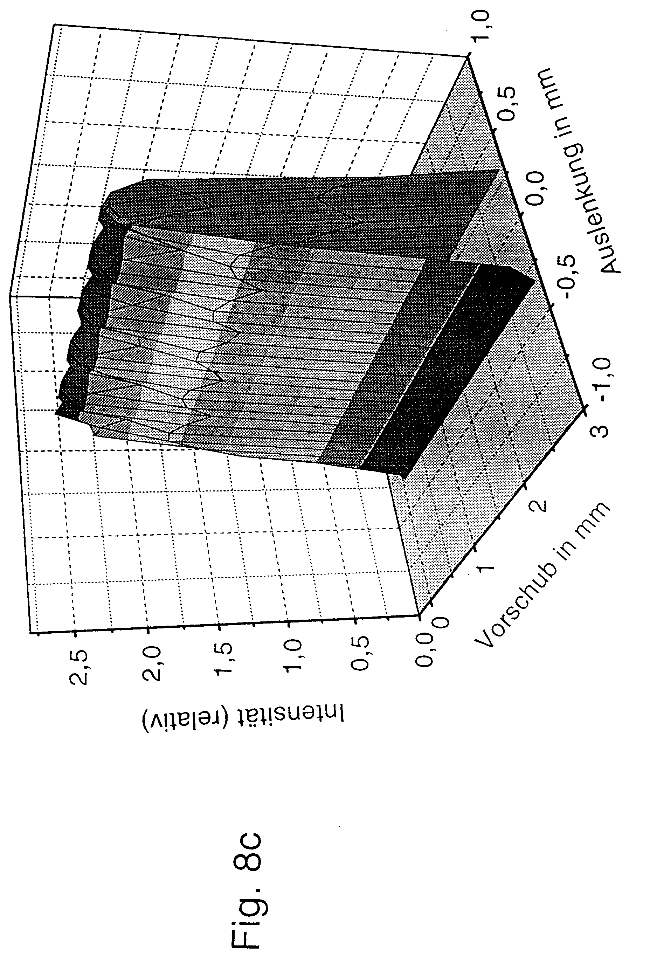

In den Figuren 8a bis 8c wird demonstriert, wie das Verhältnis von Drehzahl n zu Vorschub v die Form und den Verlauf der auf der Werkstückoberfläche entstehenden Zykloide bestimmt. Figur 8a stellt den Ausgangsfokus mit Top-hat-Intensitätsverteilung dar. Figur 8b zeigt die integrale Intensitätsverteilung längs zur Schweißspur, die bei n = 10 T U/min und v - 10 m/min entsteht. Aus den durchgeführten Schweißversuchen wird deutlich sichtbar, daß Schwankungen in der Maximalintensität zu einer periodischen Plasmazündung führen können, wobei keine gleichmäßige tiefe Schweißnaht erzeugt wird. In Figur 8c dagegen, wo die Drehzahl auf n = 60 T U/min erhöht worden ist und der Vorschub mit v = 10 m/min konstant geblieben ist, vergleichmäßigte sich die Intensitätsverteilung der Zykloide, wodurch ein stabiles Schweißplasma und damit Schweißnähte mit gleichmäßiger Einschweißtiefe in Längsrichtung erzielt werden können.

Mit der Vorrichtung von Figur 2 und den Einstellparametern von Figur 8c konnten im Werkstoff St 37 Schweißnähte mit konstanter Einschweißtiefe von 6,4 mm und einer Nahtbreite von 3,3 mm bei 4,5 kW Laserleistung realisiert werden. Die Schweißnähte wiesen eine geringere Porenanzahl mit kleineren Porengrößen auf, als mit statischem Strahlfleck bei vergleichbaren Prozeßparametern erzeugte Schweißnähte.

Die mit Bezug auf das Ausführungsbeispiel 3 genannten Zielstellungen konnten mit der erfindungsgemäßen Strahlformung erfüllt werden.

## 4. Ausführungsbeispiel

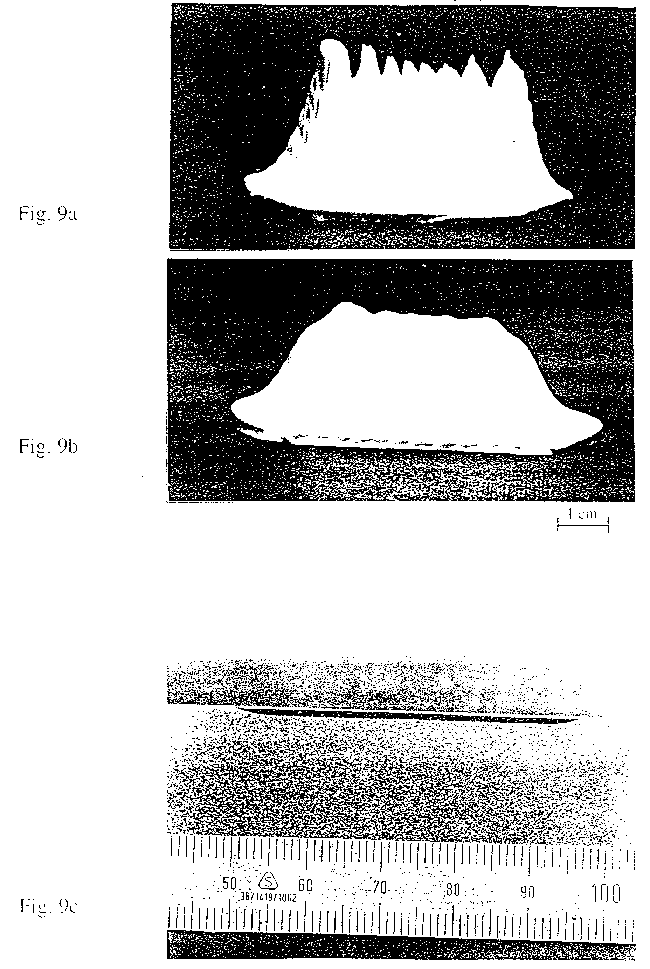

Unter Verwendung der in Figur 2 dargestellten und im Ausführungsbeispiel 1 beschriebenen Vorrichtung wurden Probeteile des Werkstoffs GG30 randschichtgehärtet. Mit 5 kW Laserleistung und einer höchstzulässigen Oberflächentemperatur 1150°C sollte eine Spurbreite von 46 mm bei einem Strahlfleckachsenverhältnis D : d = 8 : 1 und der Vorschubgeschwindigkeit von 250 mm/min 1,1 mm tief gehärtet werden. Diese Einstellparameter wurden mit einem Optimierungsprogramm im voraus ermittelt. Das dazu notwendige Achsverhältnis wurde durch einen Linienfokussierspiegel realisiert, mit dem ein etwa 49 x 7 mm$^2$ großer Strahlfleck erzeugt werden kann. Der mit diesem statischen tinienfokussierspiegel erzielbare Spot ist gekennzeichnet durch eine Vielzahl von Intensitätsspitzen, wie in Figur 9a demonstriert wird. Diese Überhöhungen führen dazu, daß dort die für den Werkstoff maximal zulässige Oberflächentemperatur überschritten wird und es zu partiellen Aufschmelzungen kommt. Um diese intensitätsbedingten Aufschmelzungen zu vermeiden mußte bisher die o.g. Oberflächentemperatur gesenkt werden, was wie bekannt, das erzielbare Härteergebnis verschlechtert. Durch Verwendung des erfindungsgemäßen Verfahrens zur Laserstrahlformung, insbesondere unter Nutzung des Prinzips von Figur 2 und dem o.g. Linienfokussierspiegel, werden die Intensitätsspitzen, wie in Figur 9b dargestellt abgebaut (verschliffen). Die o.g. optimierten und im voraus errechneten Bestrahlungsparameter konnten realisiert werden und damit die Zielstellung, vergleiche Figur 9c, nämlich eine Härtespur von 46 mm Breite mit einer Umwandlungstiefe von 1,1 mm ohne Aufschmelzungen in der Härtespur zu erhalten, mit dem erfindungsgemäßen Verfahren erfüllt werden.

### 5. Ausführungsbeispiel

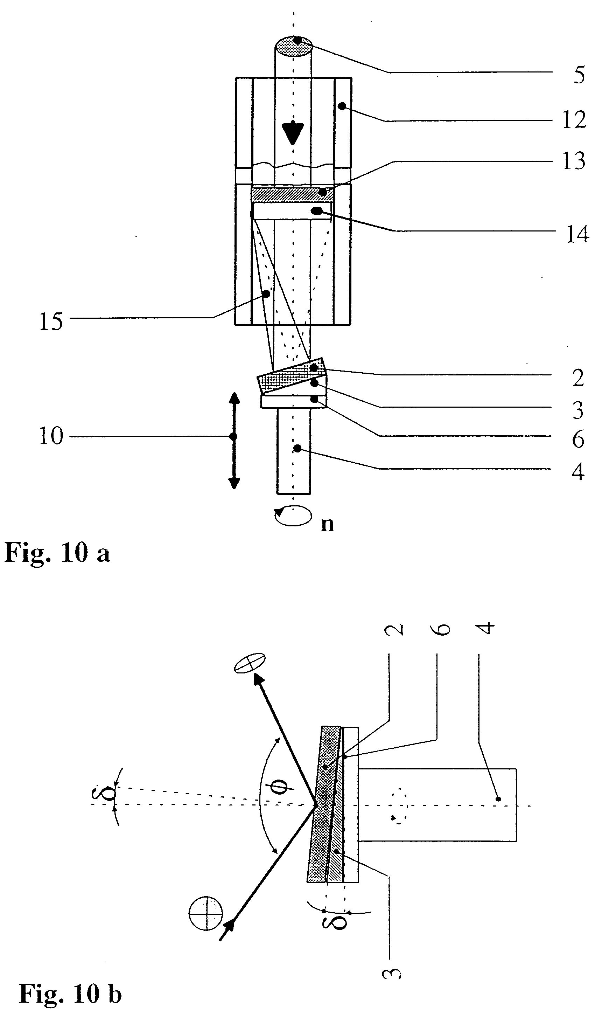

Die Vorrichtungsvariante gemäß Ausführungsbeispiel 5 ist in den Figuren 10a und 10b dargestellt, wobei Figur 10a die Anordnung selbst und Figur 10b die Änderung der Laserstrahlform vor und nach dem Auftreffen auf den Drehspiegel 2 darstellen.

In diesem Ausführungsbeispiel ist eine Möglichkeit genannt, mit der erfindungsgemäßen Lösung auch Rohrinnenwände zu härten und zwar mit definierten Härteprofilen, Härtungsspuren und Laserstrahleinwirkflächen.

Dazu wird der Laserstrahl 5 (Laserleistung > 10 KW) durch das Rohr hindurch geleitet und trifft nach dem Durchtritt durch das Rohr auf den Drehspiegel 2, der hier ein Fokussierspiegel mit f = 400 mm ist. Der Drehspiegel 2 ist analog den vorangegangenen Ausführungsbeispielen auf einer Keilscheibe 3, die hier eine Keilringscheibe ist, befestigt und zusammen mit dieser auf einer Aufnahme 6 verankert, die über eine Achse mit der Turbine 4 gekoppelt ist. Der Drehspiegel 2 wird über die Turbine 4 mit über 5.000 U/min gedreht und es wird so unter Berücksichtigung des Fokussierkegels 15 der Optik an der Innenwand des Rohres 12 eine ringförmige Bestrahlungszone 14 erreicht. In Figur 10a ist über der Bestrahlungszone 14 noch schematisch die bereits bestrahlte und gehärtete Rohrinnenwand 13 dargestellt. Im Unterschied zu den vorangegangenen Beispielen wird hier auf den statischen Spiegel 1 gänzlich verzichtet und die Vorschubbewegung 10 erfolgt hier durch den Komplex Drehspiegel 2 / Keilscheibe 3 / Aufnahme 6 / Turbine 4. Eine Variante der Beeinflussung der Laserstrahlform ist aus Figur 10b ersichtlich. Im übrigen ist auch hier die Möglichkeit der Beeinflussung des Härteprofiles, der Härtungsspur und der Laserstrahleinwirkfläche mittels der bereits beschriebenen Variation der Winkel $\Phi$ und/oder $\delta$ bzw. des Abstandes 9 zwischen Drehspiegel 2 und Probe 7, d.h. in diesem Fall der Abschnitt der Rohrinnenwand, wo der Laserstrahl auftrifft, möglich.

Mit der hier dargestellten Variante der Erfindung wurde eine Rohrinnenwandhärtung mit der erforderlichen Präzision und unter definierten Bedingungen erstmals möglich.

### 6. Ausführungsbeispiel

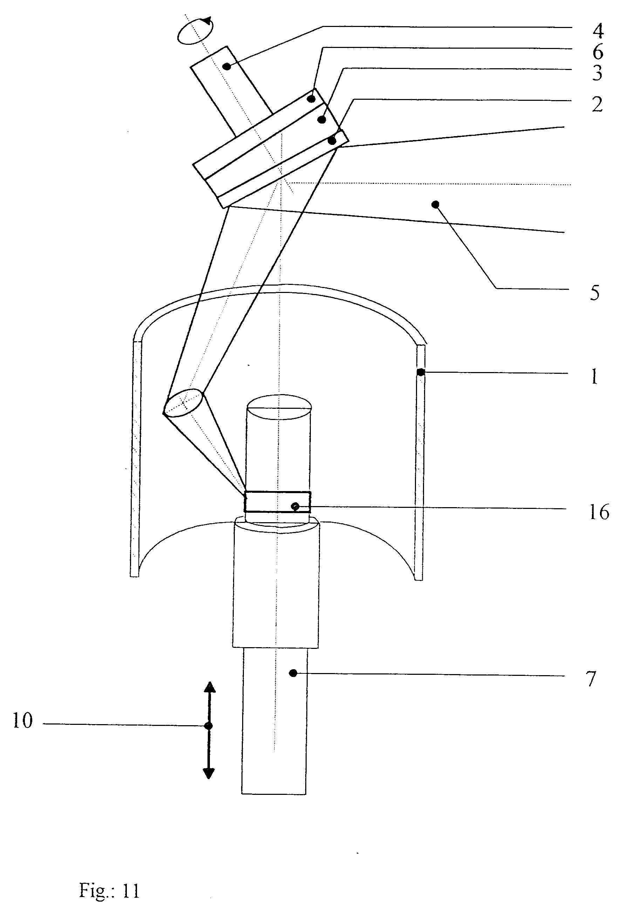

Die im Ausführungsbeispiel 6 beschriebene Vorrichtungsvariante, mit der vor allem Wellen und Wellenstümpfe gehärtet werden können, ist in Figur 11 schematisch skizziert.

Dabei trifft der Laserstrahl 5 (Laserleistung > 10 KW) auf den wie bereits beschrieben auf einer Keilscheibe 3 befestigten und mit diesem über die Aufnahme 6 und eine Achse mit der Turbine 4 gekoppelten Drehspiegel 2, der hier ein Planspiegel aus Kupfer ist und wassergekühlt sein kann. Der Drehspiegel wird mit über 5.000 U/min gedreht. Von der zur Drehachse gekippten strahlablenkenden Fläche des Drehspiegels wird der Laserstrahl, wie in Figur 7 dargestellt, auf den statischen strahlformenden Spiegel 1 reflektiert. Dieser statische strahlformende Spiegel 1 ist als Zylindersegment ausgebildet, dessen Innenseite die Spiegelfläche ist und der ebenfalls wassergekühlt sein kann. Von dem Zylindersegmentspiegel 1 wird dann der Strahl auf die Probe 7, die im Beispiel ein Wellenstumpf war, reflektiert, wo eine kontinuierliche Härtung der Oberfläche erfolgt. Die Vorschubbewegung 10 erfolgt hier durch den Wellenstumpf. Bei der in Figur 11 dargestellten Variante wird der Wellenstumpf von den Spiegeln 1,2 weg bewegt. Deshalb ist auch die bereits gehärtete und bestrahlte Wellenoberfläche 16 unterhalb der Laserstrahleinwirkfläche vermerkt.

Die Beeinflussung des Härteprofils, der Härtungsspur und der Laserstrahleinwirkfläche kann wie im 5. Ausführungsbeispiel beschrieben erfolgen.

Mit dieser Variante der Erfindung konnten erstmals Wellen und Wellenstümpfe mit dieser Präzision und diesen Variationsmöglichkeiten gehärtet werden.

### Aufstellung der Bezugszeichen und Begriffe

| 1 | statischer strahlformender Spiegel |
| 2 | Drehspiegel |
| 3 | Keilscheibe / Keilring |

| 4 | Turbine / Antrieb |
|---|---|
| 5 | Laserstrahl |
| 6 | Aufnahme / Halterung für Keilscheibe und Drehspiegel |
| 7 | Probe / Werkstück |
| 8 | Spot / Einwirkfläche |
| 9 | Arbeitsabstand / Abstand zwischen Drehspiegel (2) und Probenoberfläche (8) |
| 10 | Vorschubrichtung / Vorschub |
| 11 | Spiegelabstand = Abstand zwischen statischem strahlformenden Spiegel (1) und Drehspiegel (2) |
| 12 | Rohrwand |
| 13 | bereits bestrahlte und gehärtete Rohrrinnenwand |
| 14 | ringförmige Bestrahlungszone |
| 15 | Fokussierkegel der Optik |
| 16 | bereits gehärtete und bestrahlte Wellenoberfläche |
| 17 | Spiegelfläche des als Zylindersegment ausgebildeten, statischen, strahlformenden Spiegel (1) |
| 18 | Umlenkspiegel |
| 19 | symmetrische Spotform: Ellipse |
| $19_z$ | Spofform bei Verstellung in Richtung Z |
| $20_x$ | Spottorm bei Verstellung in Richtung X |
| c | Betrag der Verstellung |
| D | große Ellipsenachse / Hauptachse des Strahlflecks / Achsauslenkung |
| d | kleine Ellipsenachse / Achsauslenkung |
| $d_{1...4}$ | Nebenachse des Strahlflecks |
| n | Drehzahl |
| R | Radius / Strahlradius |
| v | Vorschub / Vorschubgeschwindigkeit |
| X, Y | Achsen im kartesischen Koordinatensystem |
| δ | Keilwinkel |
| Φ | Umlenkwinkel |

## Patentansprüche

1. Vorrichtung zur Laserstrahlformung, insbesondere bei der Laserstrahl-Oberflächenbearbeitung, mit mindestens einem drehbar gelagerten und rotierend antreibbaren Drehspiegel (2) und ggf. mit mindestens einem statischen strahlformenden Spiegel (1), **dadurch gekennzeichnet,** daß in Laserstrahlrichtung gesehen zuerst der oder die statischen, strahlformenden Spiegel (1) und danach der oder die Drehspiegel (2) angeordnet sind, daß die Senkrechte auf der strahlablenkenden Fläche des Drehspiegels (2) um einen bestimmten Winkel zur Drehachse verkippt ist, weshalb auf der zum Laserstrahl (5) abgewandten Drehspiegelseite eine entsprechend dem gewünschten Verkippungswinkel geformte und entsprechend der Drehspiegelgröße dimensionierte Keilscheibe (3) oder Keilring befestigt ist, und die strahlablenkende Fläche des Drehspiegels (2) glatt ist.

2. Vorrichtung nach Anspruch 1, **dadurch gekennzeichnet,** daß die strahlablenkende Fläche des Drehspiegels (2) eben ist, wenn dieser keine strahlformenden Funktionen zu erfüllen hat.

3. Vorrichtung nach Anspruch 1, **dadurch gekennzeichnet,** daß für den Fall, daß der Drehspiegel (2) strahlformende Funktionen zu erfüllen hat, dieser entsprechend der strahlformenden Funktion geformt ist.

4. Vorrichtung nach einem oder mehreren der Ansprüche 1 bis 3, **dadurch gekennzeichnet,** daß bei Laserleistungen ab 1 kW die Spiegel (1,2) Metallspiegel sind.

5. Vorrichtung nach Anspruch 4, **dadurch gekennzeichnet,** daß die Metallspiegel (1, 2) Kupfer-Spiegel sind.

6. Vorrichtung nach einem oder mehreren der Ansprüche 1 bis 5, **dadurch gekennzeichnet,** daß in der Vorrichtung jeweils nur ein statischer strahlformender Spiegel (1) und ein Drehspiegel (2) eingesetzt werden.

7. Vorrichtung nach einem oder mehreren der Ansprüche 1 bis 6, **dadurch gekennzeichnet,** daß als Drehspiegel (2), entsprechend dessen vorhandener oder nicht vorhandener strahlformender Funktion geformte, herkömmliche Spiegel eingesetzt werden.

8. Vorrichtung nach Anspruch 7, **dadurch gekennzeichnet,** daß die Keilscheibe (3) bzw. der Keilring derart befestigt ist, daß deren Austauschbarkeit gewahrt bleibt.

9. Vorrichtung nach einem oder mehreren der Ansprüche 1 bis 8, **dadurch gekennzeichnet,** daß der Drehspiegel (2) rotationssymmetrisch ist.

10. Vorrichtung nach einem oder mehreren der Ansprüche 1 bis 9, **dadurch gekennzeichnet,** daß bei Anwendung hoher Laserleistungen (ab 0,8 kW) für den statischen, strahlformenden Spiegel (1) und den Drehspiegel (2) Vorrichtungen zu deren Kühlung angebracht sind.

11. Vorrichtung nach einem oder mehreren der Ansprüche 1 bis 10, **dadurch gekennzeichnet,** daß als Antrieb für die Drehung des Drehspiegels (2) eine Turbine (4) (ab 10 U/min.) angeordnet ist.

12. Verfahren zur Laserstrahlformung, insbesondere bei der Laserstrahl-Oberflächenbearbeitung unter Einsatz der Vorrichtung gemäß einem oder mehreren der Ansprüche 1 bis 13, wobei der Laserstrahl (5) von der Laserstrahlquelle über ein Spiegelsystem, bestehend aus mindestens einem strahlformenden Spiegel (1) und mindestens einem drehbar gelagerten und rotierend antreibbaren Drehspiegel (2), zur Oberfläche der zu bearbeitenden Probe (7) geführt wird, **dadurch gekennzeichnet,** daß in Laserstrahlrichtung gesehen zuerst der oder die statischen strahlformenden Spiegel (1) und danach der oder die Drehspiegel (2) angeordnet sind, wobei im konkreten Anwendungsfall, wo der Drehspiegel (2) die gesamte strahlformende Funktion übernimmt, auf den statischen strahlformenden Spiegel (1) verzichtet werden kann, daß die Senkrechte auf der unstrukturierten, strahlablenkenden Fläche des Drehspiegels (2) während der Laserbearbeitung um einen bestimmten Winkel zur Drehachse mittels einer oder eines auf der zum Laserstrahl (5) abgewandten Drehspiegelseite befestigten und entsprechend dem gewünschten Verkippungswinkel geformten und entsprechend der Drehspiegelgröße dimensionierten Keilscheibe (3) oder Keilringes gekippt wird und, daß der Drehspiegel (2) während der Laserbearbeitung mit einer Drehzahl von > 10 U/min. gedreht wird.

13. Verfahren nach Anspruch 12, **dadurch gekennzeichnet**, daß bei einer Laserleistung > 0,8 kW die Spiegel (1, 2) gekühlt werden.

14. Verfahren nach Anspruch 12 oder 13, **dadurch gekennzeichnet**, daß die Drehzahl des Drehspiegels (2) während der Laserbearbeitung verändert und zur Optimierung der jeweiligen Bearbeitungsaufgabe angepaßt wird.

15. Verfahren nach einem oder mehreren der Ansprüche 12 bis 14, **dadurch gekennzeichnet,** daß der Drehspiegel (2) mittels einer Turbine (4) gedreht wird.

16. Verfahren nach einem oder mehreren der Ansprüche 12 bis 15, **dadurch gekennzeichnet,** daß die Keilscheibe (3) bzw. der Keilring austauschbar befestigt sind.

17. Verfahren nach Anspruch 16, **dadurch gekennzeichnet,** daß der Winkel, um den die strahlablenkende Fläche des Drehspiegels (2) zur Drehachse verkippt ist, verändert wird, was auch kontinuierlich während des Drehspiegelbetriebes erfolgen kann.

18. Anwendung der Vorrichtung nach einem oder mehreren der Ansprüche von 1 bis 11 und des Verfahrens nach einem oder mehreren der Ansprüche von 12 bis 17, **dadurch gekennzeichnet,** daß sie zur Laserstrahloberflächenhärtung von Bauteilen, bei der Gas- oder Festkörperlaser eingesetzt werden, vorgesehen sind.

19. Anwendung nach Anspruch 18, **dadurch gekennzeichnet,** daß der Einsatz zur Laserstrahloberflächenhärtung großer Bauteile vorgesehen ist.

20. Anwendung nach Anspruch 18, **dadurch gekennzeichnet,** daß der Einsatz zur Laserstrahloberflächenhärtung von Innenwänden von Rohren vorgesehen ist.

21. Anwendung der Vorrichtung nach einem oder mehreren der Ansprüche von 1 bis 11 und des Verfahrens nach einem oder mehreren der Ansprüche von 12 bis 17, **dadurch gekennzeichnet,** daß sie zum Laserstrahlschweißen eingesetzt werden.

**Claims**

1.  A device for laser beam shaping, especially in laser beam surface treatment, with at least onE rotary mirror (2) rotatably mounted and drivable in rotation, and optionally with at least one static beam shaping mirror (1), characterized in that as regarded in the laser beam direction there are arranged firstly the static beam shaping mirror(s) (1) and then the rotary mirror(s) (2), in that the normal to the beam deflecting surface of the rotary mirror (2) is tilted through a certain angle to the axis of rotation, for which there is fixed to the side of the rotary mirror facing away from the laser beam (5) a wedge disc (3) or wedge ring shaped in accordance with the desired angle of tilt and dimensioned in accordance with the size of the rotary mirror, and the surface of the rotary mirror (2) deflecting the beam is smooth.

2.  A device according to claim 1, characterized in that the beam deflecting surface of the rotary mirror (2) is flat, when this has no beam shaping function to fulfil.

3.  A device according to claim 1, characterized in that in the case in which the rotary mirror (2) has to fulfil a beam shaping function, this is shaped in accordance with the beam shaping function.

4.  A device according to one or more of claims 1 to 3, characterized in that with laser powers from 1 kW the mirrors (1, 2) are metal mirrors.

5.  A device according to claim 4, characterized in that the metal mirrors (1, 2) are copper mirrors.

6.  A device according to one or more of claims 1 to 5, characterized in that only one static beam shaping mirror (1) and one rotary mirror (2) are used in the device.

7.  A device according to one or more of claims 1 to 6, characterized in that conventional mirrors are used as rotary mirrors (2), in accordance with their present or absent beam shaping function.

8.  A device according to claim 7, characterized in that the wedge disc (3) or the wedge ring is so fixed that it remains capable of being exchanged.

9.  A device according to one or more of claims 1 to 8, characterized in that the rotary mirror (2) has rotational symmetry.

10. A device according to one or more of claims 1 to 9, characterized in that devices for cooling are fitted to the static, beam shaping mirror (1) and the rotary mirror (2) for use of higher laser powers (from 0.8 kW).

11. A device according to one or more of claims 1 to 10, characterized in that a turbine (4) (from 10 rpm) is arranged to drive the rotary mirror (2).

12. A method of laser beam shaping, especially in laser beam surface treatment, using a device according to one or more of claims 1 to 13 [11], wherein the laser beam (5) is passed from the laser source through a mirror system, consisting of at least one beam shaping mirror (1) and at least one rotary mirror (2) rotatably mounted and rotatably drivable, to the surface of the sample (7) to be machined, characterized in that as regarded in the direction of the laser beam, there are arranged firstly the static beam shaping mirror(s) (1) and then the rotary mirror(s) (2), wherein in the concrete case in which the rotary mirror (2) takes care of the whole beam shaping function, the static beam shaping mirror (1) can be dispensed with, in that the normal to the unstructured, beam deflecting surface of the rotary mirror (2) is tilted through a specific angle to the axis of rotation by means of a wedge disc (3) or wedge ring fixed on the side of the rotary mirror facing away from the laser beam (5) and shaped in accordance with the desired angle of tilt and dimensioned in accordance with the size of the rotary mirror, and in that the rotary mirror (2) is rotated during the laser machining with a speed of rotation >10 rpm.

13. A method according to claim 12, characterized in that the mirrors (1, 2) are cooled with a laser power >0.8 kW.

14. A method according to claim 12 or 13, characterized in that the speed of rotation of the rotary mirror (2) is altered during the laser machining and matched to optimise the current machining task.

15. A method according to one or more of claims 12 to 14, characterized in that the rotary mirror (2) is rotated by means of a turbine (4).

16. A method according to one or more of claims 12 to 15, characterized in that the wedge disc (3) or the wedge ring is fixed with the ability to be exchanged.

17. A method according to claim 16, characterized in that the angle through which the beam deflecting surface of the rotary mirror (2) is tilted relative to the axis of rotation is altered, which can also take place continuously during the operation of the rotary mirror.

18. Use of the device according to one or more of claims 1 to 11 and of the method according to one or more of claims 12 to 17, characterized in that they are provided for laser beam surface hardening of components, in which gas or solid body lasers are used.

19. Use according to claim 18, characterized in that the use is provided for laser beam surface hardening of large components.

20. Use according to claim 18, characterized in that the use is provided for laser beam surface hardening of inner walls of tubes.

21. Use of the device according to one or more of claims 1 to 11 and of the method according to one or more of claims 12 to 17, characterized in that it is used for laser beam welding.

**Revendications**

1. Dispositif pour former un faisceau laser, notamment pour l'usinage en surface par faisceau laser avec au moins un miroir tournant (2) monté à rotation et entrainé en rotation et le cas échéant au moins un miroir statique 1 formant le faisceau,
   caractérisé en ce que

   - dans la direction du faisceau laser on a tout d'abord le ou les miroir(s) statique(s) (1) formant le faisceau puis le ou les miroir(s) tournant(s) (2),
   - la perpendiculaire à la surface du miroir tournant (2) déviant le faisceau est basculée d'un certain angle par rapport à l'axe de rotation et sur le côté du miroir tournant opposé à celui rencontré par le faisceau laser (5), est fixé un disque en forme de coin (3) ou un anneau en forme de coin de dimension correspondant à l'angle de basculement souhaité, et correspondant à la dimension du miroir tournant, et la surface déviant le faisceau du miroir tournant (2) est lisse.

2. Dispositif selon la revendication 1,
   caractérisé en ce que
   la surface du miroir tournant (2) déviant le faisceau est plane lorsque cette surface n'a pas à remplir de fonction de mise en forme de faisceau.

3. Dispositif selon la revendication 1,
   caractérisé en ce que
   dans le cas où le miroir tournant (2) a une des fonctions de mise en forme de faisceau, il est formé suivant la fonction de formation de faisceau.

4. Dispositif selon une ou plusieurs des revendications 1 a 3,
   caractérisé en ce que
   pour des puissances de laser supérieures à 1 kW, les miroirs (1, 2) sont des miroirs en métal.

5. Dispositif selon la revendication 4,
   caractérisé en ce que
   les miroirs en métal (1, 2) sont des miroirs en cuivre.

6. Dispositif selon une ou plusieurs des revendications 1 à 5,
   caractérise en ce que
   dans le dispositif il n'y a qu'un miroir statique 1 formant le faisceau et un miroir tournant (2).

7. Dispositif selon une ou plusieurs des revendications 1 à 6,
caractérisé en ce que
le miroir tournant (2) est formé en fonction de la fonction de formation de faisceau existante ou absente, et est constituée par un miroir usuel.

8. Dispositif selon la revendication 7,
caractérisé en ce que
le disque en forme de coin (3) ou l'anneau en forme de coin est fixé pour être échangeable.

9. Dispositif selon une ou plusieurs des revendications 1 à 8,
caractérisé en ce que
le miroir tournant (2) a une symétrie de rotation.

10. Dispositif selon l'une quelconque des revendications 1 à 9,
caractérisé en ce qu'
en appliquant des puissances de laser élevées (supérieures à 0,8 kW), des moyens de refroidissement sont prévus pour le miroir statique (1) formant le faisceau et pour le miroir tournant (2).

11. Dispositif selon l'une quelconque des revendications 1 à 10,
caractérisé en ce que
le moyen d'entraînement en rotation du miroir tournant (2) est constitué par une turbine (4) (pour une vitesse de rotation supérieure à 10 T/min.).

12. Procédé de mise en forme d'un faisceau laser, notamment pour un usinage de surface par faisceau laser en utilisant le dispositif selon l'une ou plusieurs des revendications 1 à 11, selon lequel le faisceau laser (5) est conduit à partir d'une source de faisceau laser par l'intermédiaire d'un système de miroirs comprenant au moins un miroir (1) formant le faisceau et au moins un miroir tournant (2) monté à rotation et entraîné en rotation, vers la surface de l'échantillon (7) à usiner,
caractérisé en ce que

- dans la direction du faisceau laser il y a tout d'abord le ou les miroir(s) statique(s) (1) formant le faisceau puis le ou les miroir(s) rotatif(s) (2) et dans une application pratique, lorsque le miroir tournant (2) assure toute la fonction de mise en forme du faisceau, le miroir statique (1) formant le faisceau est supprimé,
- la perpendiculaire à la surface non structurée de déviation du faisceau du miroir tournant (2) est basculée pendant l'usinage par laser d'un certain angle par rapport à l'axe de rotation à l'aide d'un disque en coin (3) ou d'un anneau en coin fixé sur le côté du miroir tournant opposé à celui du faisceau laser (5), formé en fonction de l'angle de basculement souhaité et dimensionné suivant les dimensions du miroir tournant, et
- le miroir tournant (2) tourne à une vitesse de rotation supérieure à 10 T/min. pendant l'usinage par laser.

13. Procédé selon la revendication 12,
caractérisé en ce que
pour une puissance de laser supérieure à 0,8 kW on refroidit les miroirs (1, 2).

14. Procédé selon l'une des revendications 12 ou 13,
caractérisé en ce que
la vitesse de rotation du miroir tournant (2) est modifiée pendant l'usinage par laser et est adaptée pour optimiser la fonction d'usinage respective.

15. Procédé selon l'une ou plusieurs des revendications 12 à 14,
caractérisé en ce que
le miroir tournant (2) est entraîné par une turbine (4).

16. Procédé selon l'une ou plusieurs des revendications 12 à 15,
caractérisé en ce que
le disque en coin (3) ou l'anneau en coin est fixé de manière interchangeable.

17. Procédé selon la revendication 16,
caractérisé en ce que

l'angle suivant lequel la surface de déviation du faisceau du miroir tournant (2) est basculé par rapport à l'axe de rotation et modifié ce qui peut se faire de manière continue pendant le fonctionnement du miroir tournant.

18. Application du dispositif selon une ou plusieurs des revendications 1 à 11 et du procédé selon une ou plusieurs des revendications 12 à 17,
caractérisée en ce qu'
il est prévu pour la trempe en surface par faisceau laser de pièce, utilisant des faisceaux par laser à gaz ou à solide.

19. Application selon la revendication 18,
caractérisée en ce que
l'utilisation pour la trempe en surface par faisceau laser est celle de pièces de grande dimension.

20. Application selon la revendication 18,
caractérisée en ce que
l'utilisation de trempe en surface par faisceau laser concerne la paroi intérieure de tuyau.

21. Application du dispositif selon une ou plusieurs des revendications 1 à 11 et du procédé selon l'une ou plusieurs des revendications 12 à 17,
caractérisée en ce qu'
elle concerne le soudage par faisceau laser.

FIG. 1

FIG. 2

$\phi = 60°$

$$\frac{D}{d_2} = \frac{1}{0.87}$$

FIG. 3

$$\phi = 90°$$

$$\frac{D}{d_3} = \frac{1}{0.71}$$

FIG. 4

$\phi = 120°$

$$\frac{D}{d_4} = \frac{1}{0.5}$$

FIG. 5

Fig. 6a

Fig. 6b

Fig. 7a

Fig. 7b

Fig. 7c

Fig. 8a

Fig. 8b

Fig. 8c

Fig. 9a

Fig. 9b

1 cm

Fig. 9c

**Fig. 10 a**

**Fig. 10 b**

Fig.: 11